# EUROPEAN PATENT APPLICATION

(11) **EP 4 199 571 A1**
(43) Date of publication of application: **21.06.2023**
(21) Application number: 21863570.4
(22) Date of filing: 27.08.2021
(51) Int. Cl.: H04W 24/02

(54) **MULTI-STREAM ASSOCIATED TRANSMISSION METHOD, APPARATUS, AND SYSTEM**

(30) Priority: 02.09.2020 CN 202010912396
(71) Applicant: Huawei Technologies Co., Ltd., Shenzhen, Guangdong 518129 (CN)
(72) Inventor: HU, Weihua, Shenzhen, Guangdong 518129 (CN)
(74) Representative: Pfenning, Meinig & Partner mbB
(86) International application number: PCT/CN2021/115127
(87) International publication number: WO 2022/048505

(57) **Abstract**

Embodiments of this application provide a multi-flow associated transmission method, an apparatus, and a system, to resolve problems that a latency is large when service packets in a plurality of service sub-flows need to be synchronously transmitted, and a packet loss may occur at a receiving end due to a buffer overflow. The method includes: obtaining a first service packet in each of a plurality of service sub-flows, where the first service packet includes transmission time sequence information and a group identifier of a service flow group to which each service sub-flow belongs; determining, based on the group identifiers, that there is an association relationship between the plurality of service sub-flows; and synchronizing transmission of service packets in the plurality of service sub-flows after determining, at a first moment based on the transmission time sequence information of the first service packet in each service sub-flow, that a transmission time sequence of a first service packet in a first service sub-flow in the plurality of service sub-flows lags behind a transmission time sequence of a first service packet in a second service sub-flow by more than a first threshold, where the first service packet in each service sub-flow is a service packet with a largest transmission time sequence in service packets in the service sub-flow at the first moment.

## Description

This application claims priority to Chinese Patent Application No. 202010912396.2, filed with the China National Intellectual Property Administration on September 2, 2020 and entitled "MULTI-FLOW ASSOCIATED TRANSMISSION METHOD, APPARATUS, AND SYSTEM", which is incorporated herein by reference in its entirety.

### TECHNICAL FIELD

This application relates to the field of communication technologies, and in particular, to a multi-flow associated transmission method, an apparatus, and a system.

### BACKGROUND

With development of network bandwidth, the industry predicts that a new holographic communication manner will emerge and gradually mature. Compared with current mainstream audio and video calls, the holographic communication not only includes visual and auditory experience, but also introduces multi-sensory experience including a sense of smell, a sense of taste, a sense of touch, and the like. For example, food advertisements in the future will not only allow viewers to see the color and shape of food, but also directly stimulate people's nerves using a taste simulator, so that the viewers can also taste the flavor of food. In short, in the new holographic communication manner, more-dimensional service sub-flows are transmitted concurrently, and these concurrent service sub-flows need to be precisely synchronized and coordinated, that is, service packets in all service sub-flows at a same moment need to arrive at the same time, so as to ensure optimal user experience.

However, currently, there is a lack of awareness between a mobile network and an application, and support for the foregoing multi-dimensional concurrent associated service sub-flows is not considered. Take a video call service as an example. A bearer is created for each of an audio stream and a video stream of the video call service at a mobile network layer, and different quality of service (quality of services, QoS) class identifiers (QoS class identifier, QCI) are allocated. That is, the mobile network considers an audio stream service packet and a video stream service packet of a same audio and video call as two irrelevant service packets, and forwards the packets through two unrelated bearers. In order to ensure synchronization of two associated service sub-flows, an application layer needs to ensure that the service packets in the two service sub-flows are played synchronously to end users through buffering at a receiving end. Such a solution obviously sacrifices the latency to some extent, that is, a service sub-flow that arrives first is submitted to the application layer for processing, for example, submitted to the application layer for playing, only after service packets in another service sub-flow all arrive.

In addition, currently, a terminal device usually has only one data connection for receiving and sending a service packet. However, a mobile network in a 5th generation (5th generation, 5G) era provides rich multi-access capabilities, and a terminal device generally supports a dual connectivity (dual connection, DC) feature, and can establish two wireless connections to a network. In addition, the 5G network integrates satellite access, wireless-fidelity (wireless-fidelity, Wi-Fi), and wired access. If a terminal device has a satellite, Wi-Fi, or wired access capability, the terminal device can establish a plurality of different connections to the network. In this way, when a holographic communication service is performed by using a multi-connection capable terminal device, a plurality of service sub-flows between which there is an association relationship may be carried on different connections. Obviously, due to differences in transmission capabilities and routes of the connections, it is more difficult to ensure synchronization of the plurality of service sub-flows carried on the different connections. For data packets that originally need to be synchronously processed at the application layer on a receiving side, a difference in arrival time may be greater, and a latency is also greater. In addition, because the arrival time difference is relatively large, pressure of data synchronization and sorting on the receiving side is greater, which may cause a buffer overflow and packet loss, and significantly affect user experience.

### SUMMARY

Embodiments of this application provide a multi-flow associated transmission method, an apparatus, and a system, to resolve problems that a latency is large when service packets in a plurality of service sub-flows need to be synchronously transmitted, and a packet loss may occur at a receiving end due to a buffer overflow.

To achieve the foregoing objectives, the following technical solutions are used in embodiments of this application.

According to a first aspect, a multi-flow associated transmission method is provided. A communication apparatus that performs the method may be a user plane network element, an access network device, or a terminal device, or may be a module, such as a chip, used in the user plane network element, the access network device, or the terminal device. The multi-flow associated transmission method includes: The communication apparatus obtains a first service packet in each of a plurality of service sub-flows, where the first service packet in each service sub-flow includes a group identifier of a service flow group to which the service sub-flow belongs and transmission time sequence information of the first service packet in the service sub-flow; the communication apparatus determines, based on the group identifier of the service flow group to which each service sub-flow belongs, that there is an association relationship between the plurality of service sub-flows; the communication apparatus determines, at a first moment based on the transmission time sequence information of the first service packet in each service sub-flow, that a transmission time sequence of a first service packet in a first service sub-flow in the plurality of service sub-flows lags behind a transmission time sequence of a first service packet in a second service sub-flow by more than a first threshold, where the first service packet in each service sub-flow is a service packet with a largest transmission time sequence in service packets in the service sub-flow at the first moment, the first service sub-flow is a service sub-flow whose first service packet has a smallest transmission time sequence in the plurality of service sub-flows, and the second service sub-flow is a service sub-flow whose first service packet has a largest transmission time sequence in the plurality of service sub-flows; and the communication apparatus synchronizes transmission of service packets in the plurality of service sub-flows. According to the multi-flow associated transmission method provided in this embodiment of this application, after determining, at the first moment, that the transmission time sequence of the first service packet in the first service sub-flow in the plurality of service sub-flows lags behind the transmission time sequence of the first service packet in the second service sub-flow by more than the first threshold, the communication apparatus may take a corresponding scheduling measure to ensure that the service packets in all the associated service sub-flows are transmitted synchronously as much as possible. Therefore, a packet loss due to a buffer overflow at the receiving end can be avoided, and a latency can be reduced, ensuring optimal user experience and network efficiency.

It can be noted that the first service sub-flow in this embodiment of this application may also be understood as a service sub-flow in which a service packet is sent the slowest in a time period before the first moment. The second service sub-flow in this embodiment of this application may also be understood as a service sub-flow in which a service packet is sent the fastest in a time period before the first moment. This is uniformly described herein, and details are not described below.

In a possible implementation, the transmission time sequence information includes a timestamp or a synchronization sequence number.

In a possible implementation, that the communication apparatus synchronizes transmission of service packets in the plurality of service sub-flows includes: The communication apparatus determines that current user plane forwarding resources are sufficient; and the communication apparatus updates a forwarding priority of the first service sub-flow from a first priority to a second priority, where the second priority is higher than the first priority. In other words, in this implementation, when the current user plane forwarding resources are sufficient, the communication apparatus may increase a forwarding priority of a service sub-flow whose transmission time sequence of a first service packet in the service sub-flow is the smallest in the plurality of current service sub-flows, for example, the forwarding priority may be set to a highest forwarding priority.

In a possible implementation, that the communication apparatus synchronizes transmission of service packets in the plurality of service sub-flows includes: The communication apparatus adjusts a forwarding speed of a service packet in the second service sub-flow from a first value to a second value, where the second value is less than the first value. That is, in this implementation, a service packet in a service sub-flow whose transmission time sequence of the first service packet in the service sub-flow is relatively large in the plurality of service sub-flows may be forwarded in a manner such as buffering.

In a possible implementation, the multi-flow associated transmission method provided in this embodiment of this application further includes: The communication apparatus obtains a second service packet in each of the plurality of service sub-flows, where the second service packet in each service sub-flow includes transmission time sequence information of the second service packet in the service sub-flow; the communication apparatus determines, at a second moment based on the transmission time sequence information of the second service packet in each service sub-flow, that a transmission time sequence of a second service packet in a third service sub-flow in the plurality of service sub-flows lags behind a transmission time sequence of a second service packet in the second service sub-flow by not more than a second threshold, where the second service packet in each service sub-flow is a service packet with a largest transmission time sequence in service packets in each service sub-flow at the second moment, and the third service sub-flow is a service sub-flow whose second service packet has a smallest transmission time sequence in the plurality of service sub-flows; and the communication apparatus adjusts the forwarding speed of a service packet in the second service sub-flow from the second value to a third value, where the third value is greater than the second value. In other words, the forwarding speed of a service packet in the second service sub-flow may be adjusted from the second value to the third value when the communication apparatus determines, at the second moment, that the transmission time sequence of the second service packet in the third service sub-flow in the plurality of service sub-flows lags behind the transmission time sequence of the second service packet in the second service sub-flow by not more than the second threshold.

It can be noted that, the third service sub-flow in this embodiment of this application may also be understood as a service sub-flow whose service packet is sent at a lowest speed in a time period before the second moment. This is uniformly described herein, and details are not described below again.

In a possible implementation, that the communication apparatus synchronizes transmission of service packets in the plurality of service sub-flows includes: The communication apparatus determines that a forwarding capability of a first forwarding path that carries the first service sub-flow is limited; and the communication apparatus sends indication information to a session management network element, where the indication information indicates the session management network element to initiate a user plane reconfiguration process to switch the first service sub-flow from the first forwarding path to a second forwarding path, and a forwarding capability of the second forwarding path is higher than the forwarding capability of the first forwarding path.

For example, that the communication apparatus determines that a forwarding capability of a first forwarding path that carries the first service sub-flow is limited includes: The communication apparatus determines that load on the first forwarding path that carries the first service sub-flow is greater than a third threshold. In other words, the load on the first forwarding path that currently carries the first service sub-flow is relatively heavy. In this case, the communication apparatus may indicate the session management network element to initiate a user plane reconfiguration process, to switch the first service sub-flow from the first forwarding path to the second forwarding path with relatively light load. In other words, that the forwarding capability of the second forwarding path is higher than the forwarding capability of the first forwarding path may be understood as that the load on the second forwarding path is lighter than the load on the first forwarding path.

Alternatively, for example, that the communication apparatus determines that a forwarding capability of a first forwarding path that carries the first service sub-flow is limited includes: The communication apparatus determines that a latency of the first forwarding path that carries the first service sub-flow is greater than a fourth threshold. In other words, the latency of the first forwarding path that currently carries the first service sub-flow is relatively large. In this case, the communication apparatus may indicate the session management network element to initiate a user plane reconfiguration process, to switch the first service sub-flow from the first forwarding path to the second forwarding path with a relatively small latency. In other words, that the forwarding capability of the second forwarding path is higher than the forwarding capability of the first forwarding path may be understood as that the latency of the second forwarding path is less than the latency of the first forwarding path.

Alternatively, for example, that the communication apparatus determines that a forwarding capability of a first forwarding path that carries the first service sub-flow is limited includes: The communication apparatus determines that a transmission rate of the first forwarding path that carries the first service sub-flow is less than a fifth threshold. In other words, the rate of the first forwarding path that currently carries the first service sub-flow is relatively small. In this case, the communication apparatus may indicate the session management network element to initiate a user plane reconfiguration process, to switch the first service sub-flow from the first forwarding path to the second forwarding path with a relatively large rate. In other words, that the forwarding capability of the second forwarding path is higher than the forwarding capability of the first forwarding path may be understood as that the transmission rate of the second forwarding path is higher than the transmission rate on the first forwarding path.

According to a second aspect, a multi-flow associated transmission method is provided. A communication apparatus that performs the method may be a session management network element, or may be a module, for example, a chip, used in the session management network element. The following uses an example in which an execution body is the session management network element for description. The multi-flow associated transmission method includes: The session management network element obtains first information, where the first information includes a group identifier of a service flow group to which each of a plurality of service sub-flows belongs, and quality of service QoS policy information corresponding to each service sub-flow and/or QoS policy information of the service flow group to which each service sub-flow belongs; the session management network element determines, based on the group identifier of the service flow group to which each service sub-flow belongs, that there is an association relationship between the plurality of service sub-flows; and the session management network element guarantees associated transmission of the plurality of service sub-flows based on the QoS policy information corresponding to each service sub-flow and/or the QoS policy information of the service flow group to which each service sub-flow belongs. Based on the multi-flow associated transmission method provided in this embodiment of this application, the session management network element may obtain the group identifier of the service flow group to which each of the plurality of service sub-flows belongs, and the QoS policy information corresponding to each service sub-flow and/or the QoS policy information of the service flow group to which each service sub-flow belongs; and after determining, based on the group identifier of the service flow group to which each service sub-flow belongs, that there is an association relationship between the plurality of service sub-flows, guarantee associated transmission of the plurality of service sub-flows based on the QoS policy information corresponding to each service sub-flow and/or the QoS policy information of the service flow group to which each service sub-flow belongs, including bearer combination, selecting a same user plane network element and a same access network device, and the like. Therefore, a problem of a packet loss due to a buffer overflow caused when a plurality of service sub-flows between which there is an association relationship may be carried on different connections can be avoided, and the user plane network element or the access network device can forward, over a same forwarding path, service packets in the plurality of service sub-flows between which there is association relationship. For example, the user plane network element or the access network device may forward, via a same interface board, a same port, or the like, the service packets in the plurality of service sub-flows between which there is association relationship. In conclusion, based on the multi-flow associated transmission method provided in embodiments of this application, it can be ensured that a plurality of service sub-flows between which there is association relationship can reach a destination end as synchronously as possible when being forwarded via a mobile network. This can avoid a packet loss caused by a buffer overflow, reduce a latency, ensuring optimal user experience and network efficiency.

It can be noted that in this embodiment of this application, the QoS policy information corresponding to each service sub-flow and/or the QoS policy information of the service flow group to which each service sub-flow belongs may indicate that there may be three relationships. For example, the following three cases may be represented: The QoS policy information corresponding to each service sub-flow exists independently; both the QoS policy information corresponding to each service sub-flow and the QoS policy information of the service flow group to which each service sub-flow belongs exist; and the QoS policy information of the service flow group to which each service sub-flow belongs exists independently. This is uniformly described herein, and details are not described below.

In a possible implementation, that the session management network element guarantees associated transmission of the plurality of service sub-flows based on the QoS policy information corresponding to each service sub-flow and/or the QoS policy information of the service flow group to which each service sub-flow belongs includes: The session management network element determines that current user plane forwarding resources are sufficient; the session management network element determines, based on the QoS policy information corresponding to each service sub-flow and/or the QoS policy information of the service flow group to which each service sub-flow belongs, to combine service packets in the plurality of service sub-flows into a first bearer for transmission; and the session management network element sends a QoS requirement of the first bearer to a user plane network element, and the session management network element sends the QoS requirement of the first bearer to an access network device, where the QoS requirement of the first bearer is used for allocating a user plane resource of the first bearer. In other words, in this embodiment of this application, associated transmission of the plurality of service sub-flows may be guaranteed through bearer combination.

In a possible implementation, the first information includes the QoS policy information corresponding to each service sub-flow. The multi-flow associated transmission method provided in this embodiment of this application further includes: The session management network element sends, to the user plane network element, the QoS policy information corresponding to each service sub-flow, where the QoS policy information corresponding to each service sub-flow is used for allocating a user plane resource corresponding to each service sub-flow on the first bearer. According to this solution, user plane resources can be allocated at a finer granularity, so that a problem of user plane resource preemption between service sub-flows in a process of guaranteeing associated transmission of a plurality of service sub-flows can be avoided.

In a possible implementation, the QoS requirement of the first bearer includes at least one of the following: a bandwidth of the first bearer, a latency of the first bearer, a jitter of the first bearer, or a packet loss rate of the first bearer. The bandwidth of the first bearer is a sum of bandwidths in the QoS policy information of all the service sub-flows in the plurality of service sub-flows, or the bandwidth of the first bearer is a bandwidth in the QoS policy information of the service flow group to which each service sub-flow belongs. The latency of the first bearer is a smallest value of latencies in the QoS policy information of all the service sub-flows in the plurality of service sub-flows, or the latency of the first bearer is a latency in the QoS policy information of the service flow group to which each service sub-flow belongs. The jitter of the first bearer is a smallest value of jitters in the QoS policy information of all the service sub-flows in the plurality of service sub-flows, or the jitter of the first bearer is a jitter in the QoS policy information of the service flow group to which each service sub-flow belongs. The packet loss rate of the first bearer is a smallest value of packet loss rates in the QoS policy information of all the service sub-flows in the plurality of service sub-flows, or the packet loss rate of the first bearer is a packet loss rate in the QoS policy information of the service flow group to which each service sub-flow belongs.

In a possible implementation, that the session management network element guarantees associated transmission of the plurality of service sub-flows based on the QoS policy information corresponding to each service sub-flow and/or the QoS policy information of the service flow group to which each service sub-flow belongs includes: The session management network element selects a same user plane network element and a same access network device for the plurality of service sub-flows; the session management network element determines, based on the QoS policy information corresponding to each service sub-flow and/or the QoS policy information of the service flow group to which each service sub-flow belongs, to combine service packets in the plurality of service sub-flows into m bearers for transmission, where m is a positive integer greater than 1; and the session management network element sends QoS requirements of the m bearers to the user plane network element, and the session management network element sends the QoS requirements of the m bearers to the access network device, where the QoS requirements of the m bearers are used for allocating user plane resources of the m bearers. In other words, in this embodiment of this application, associated transmission of the plurality of service sub-flows may be guaranteed by combining bearers and selecting a same user plane network element and a same access network device.

In a possible implementation, the first information includes the QoS policy information corresponding to each service sub-flow. The multi-flow associated transmission method provided in this embodiment of this application further includes: The session management network element sends, to the user plane network element, the QoS policy information corresponding to each service sub-flow, where the QoS policy information corresponding to each service sub-flow is used for allocating a user plane resource corresponding to each service sub-flow on the m bearers. According to this solution, user plane resources can be allocated at a finer granularity, so that a problem of user plane resource preemption between service sub-flows in a process of guaranteeing associated transmission of a plurality of service sub-flows can be avoided.

In a possible implementation, the first information includes the QoS policy information corresponding to each service sub-flow. The m bearers include a second bearer, the second bearer is any one of the m bearers that is for transmitting a service packet in n service sub-flows of the plurality of service sub-flows, and n is a positive integer greater than 1. A QoS requirement of the second bearer includes at least one of the following: a bandwidth of the second bearer, a latency of the second bearer, a jitter of the second bearer, or a packet loss rate of the second bearer. The bandwidth of the second bearer is a sum of bandwidths in QoS policy information of all the n service sub-flows. The latency of the second bearer is a smallest value of latencies in the QoS policy information of all the n service sub-flows, or the latency of the second bearer is a latency in the QoS policy information of the service flow group to which each service sub-flow belongs. The jitter of the second bearer is a smallest value of jitters in the QoS policy information of all the n service sub-flows, or the jitter of the second bearer is a jitter in the QoS policy information of the service flow group to which each service sub-flow belongs. The packet loss rate of the second bearer is a smallest value of packet loss rates in the QoS policy information of all the n service sub-flows, or the packet loss rate of the second bearer is a packet loss rate in the QoS policy information of the service flow group to which each service sub-flow belongs.

In a possible implementation, the first information includes the QoS policy information corresponding to each service sub-flow. The m bearers include a third bearer, where the third bearer is any one of the m bearers that is for transmitting a service packet in one service sub-flow of the plurality of service sub-flows. A QoS requirement of the third bearer includes at least one of the following: a bandwidth of the third bearer, a latency of the third bearer, a jitter of the third bearer, or a packet loss rate of the third bearer. The bandwidth of the third bearer is a bandwidth in QoS policy information of one of the plurality of service sub-flows. The latency of the third bearer is a latency in the QoS policy information of one of the plurality of service sub-flows, or the latency of the third bearer is a latency in the QoS policy information of the service flow group to which each service sub-flow belongs. The jitter of the third bearer is a jitter in the QoS policy information of one of the plurality of service sub-flows, or the jitter of the third bearer is a jitter in the QoS policy information of the service flow group to which each service sub-flow belongs. The packet loss rate of the third bearer is a packet loss rate in the QoS policy information of one of the plurality of service sub-flows, or the packet loss rate of the third bearer is a packet loss rate in the QoS policy information of the service flow group to which each service sub-flow belongs.

In a possible implementation, the multi-flow associated transmission method provided in this embodiment of this application may further include: The session management network element allocates a same path identifier for the plurality of service sub-flows, where the path identifier identifies an Internet Protocol IP transport layer transmission path between the user plane network element and the access network device; and the session management network element sends the path identifier to the user plane network element, and the session management network element sends the path identifier to the access network device. According to this solution, it can be ensured that a same path can be used for transmission at the IP transport layer.

In a possible implementation, that the session management network element obtains first information includes: The session management network element receives the first information from a policy control network element.

In a possible implementation, before the session management network element receives the first information from the policy control network element, the multi-flow associated transmission method provided in this embodiment of this application further includes: The session management network element receives, from the user plane network element, the group identifier of the service flow group to which each of the plurality of service sub-flows belongs and flow description information of each service sub-flow; and the session management network element sends a request message to the policy control network element, where the request message includes the group identifier of the service flow group to which each of the plurality of service sub-flows belongs and the flow description information of each service sub-flow, and is for requesting to obtain the quality of service QoS policy information corresponding to each service sub-flow and/or the QoS policy information of the service flow group to which each service sub-flow belongs. In other words, in this embodiment of this application, after identifying that the service packets in the plurality of service sub-flows between which there is association relationship need to be forwarded, the session management network element on the control plane may be notified, and the session management network element interacts with the policy control network element to obtain related QoS policy information.

According to a third aspect, a communication apparatus is provided, to implement the foregoing method. The communication apparatus includes a corresponding module, unit, or means (means) for implementing the foregoing method. The module, the unit, or the means may be implemented by hardware or software, or implemented by hardware by executing corresponding software. The hardware or the software includes one or more modules or units corresponding to the foregoing functions.

According to a fourth aspect, a communication apparatus is provided. The apparatus includes a processor and a memory. The memory is configured to store computer instructions. When the processor executes the instructions, the communication apparatus is enabled to perform the method according to any one of the foregoing aspects.

According to a fifth aspect, a communication apparatus is provided, and includes a processor. The processor is configured to: after being coupled to a memory and reading instructions in the memory, perform, according to the instructions, the method according to any one of the foregoing aspects.

According to a sixth aspect, a communication apparatus is provided. The communication apparatus includes a processor and an interface circuit. The interface circuit is configured to receive a computer program or instructions and transmit the computer program or the instructions to a processor. The processor is configured to execute the computer program or the instructions, to enable the communication apparatus to perform the method according to any one of the foregoing aspects.

According to a seventh aspect, a computer-readable storage medium is provided. The computer-readable storage medium stores instructions. When the instructions are run on a computer, the computer is enabled to perform the method according to any one of the foregoing aspects.

According to an eighth aspect, a computer program product including instructions is provided. When the computer program product runs on a computer, the computer is enabled to perform the method according to any one of the foregoing aspects.

According to a ninth aspect, a communication apparatus is provided (for example, the communication apparatus may be a chip or a chip system). The communication apparatus includes a processor, configured to implement a function according to any one of the foregoing aspects. In a possible implementation, the communication apparatus further includes a memory. The memory is configured to store program instructions and data that are necessary. When the communication apparatus is the chip system, the communication apparatus may include a chip, or may include a chip and another discrete component.

For technical effects brought by any possible implementation of the third aspect to the ninth aspect, refer to technical effects brought by different implementations of the first aspect or the second aspect. Details are not described herein again.

According to a tenth aspect, a communication system is provided. The communication system includes a session management network element and a policy control network element. The policy control network element is configured to send first information to the session management network element, where the first information includes a group identifier of a service flow group to which each of a plurality of service sub-flows belongs, and QoS policy information corresponding to each service sub-flow and/or QoS policy information of the service flow group to which each service sub-flow belongs. The session management network element is configured to: receive the first information from the policy control network element, and determine, based on the group identifier of the service flow group to which each service sub-flow belongs, that there is an association relationship between the plurality of service sub-flows; and guarantee associated transmission of the plurality of service sub-flows based on the QoS policy information corresponding to each service sub-flow and/or the QoS policy information of the service flow group to which each service sub-flow belongs.

In a possible implementation, the communication system further includes an access network device and a user plane network element that communicate with the session management network element. That the session management network element is configured to guarantee associated transmission of the plurality of service sub-flows based on the QoS policy information corresponding to each service sub-flow and/or the QoS policy information of the service flow group to which each service sub-flow belongs includes: The session management network element is configured to: after determining that current user plane forwarding resources are sufficient, determine, based on the QoS policy information corresponding to each service sub-flow and/or the QoS policy information of the service flow group to which each service sub-flow belongs, to combine service packets in the plurality of service sub-flows into a first bearer for transmission; and the session management network element is further configured to send a QoS requirement of the first bearer to the user plane network element, and the session management network element is further configured to send the QoS requirement of the first bearer to the access network device, where the QoS requirement of the first bearer is used for allocating a user plane resource of the first bearer.

In a possible implementation, the communication system further includes an access network device and a user plane network element that communicate with the session management network element. That the session management network element is configured to guarantee associated transmission of the plurality of service sub-flows based on the QoS policy information corresponding to each service sub-flow and/or the QoS policy information of the service flow group to which each service sub-flow belongs includes: The session management network element is configured to select a same user plane network element and a same access network device for the plurality of service sub-flows; the session management network element is further configured to determine, based on the QoS policy information corresponding to each service sub-flow and/or the QoS policy information of the service flow group to which each service sub-flow belongs, to combine service packets in the plurality of service sub-flows into m bearers for transmission, where m is a positive integer greater than 1; and the session management network element is further configured to send QoS requirements of the m bearers to the user plane network element, and the session management network element is further configured to send the QoS requirements of the m bearers to the access network device, where the QoS requirements of the m bearers are used for allocating user plane resources of the m bearers.

In a possible implementation, the user plane network element is further configured to: after detecting that the plurality of service sub-flows are new service sub-flows, determine, based on the group identifier of the service flow group to which each of the plurality of service sub-flows belongs, that there is an association relationship between the plurality of service sub-flows; the user plane network element is further configured to send the group identifier of the service flow group to which each of the plurality of service sub-flows belongs and flow description information of each service sub-flow to the session management network element; and the session management network element is further configured to: receive, from the user plane network element, the group identifier of the service flow group to which each of the plurality of service sub-flows belongs and the flow description information of each service sub-flow, and send a request message to the policy control network element, where the request message includes the group identifier of the service flow group to which each of the plurality of service sub-flows belongs and the flow description information of each service sub-flow, and is for requesting to obtain the QoS policy information corresponding to each service sub-flow and/or the QoS policy information of the service flow group to which each service sub-flow belongs.

In a possible implementation, the communication system further includes an application function network element that communicates with the policy control network element. The application function network element is configured to send second information to the policy control network element after it is determined that there is an association relationship between the plurality of service sub-flows, where the second information includes the group identifier of the service flow group to which each of the plurality of service sub-flows belongs, and QoS policy information to be used for each service sub-flow and/or QoS policy information to be used for the service flow group to which each service sub-flow belongs. The policy control network element is configured to receive the second information from the application function network element, and determine the QoS policy information corresponding to each service sub-flow and/or the QoS policy information of the service flow group to which each service sub-flow belongs in the first information based on the QoS policy information to be used for each service sub-flow and/or the QoS policy information to be used for the service flow group to which each service sub-flow belongs and based on local policy rule configuration.

For technical effects brought by any possible implementation of the tenth aspect, refer to the technical effects brought by different implementations of the second aspect. Details are not described herein again.

### BRIEF DESCRIPTION OF DRAWINGS

FIG. 1 is a schematic diagram of a structure of an existing user plane protocol stack of a 5G network;
FIG. 2 is a schematic diagram of a structure of a communication system according to an embodiment of this application;
FIG. 3 is a schematic diagram of a 5G network architecture according to an embodiment of this application;
FIG. 4 is a schematic diagram of a structure of a communication device according to an embodiment of this application;
FIG. 5 is a schematic diagram 1 of interaction of a multi-flow associated transmission method according to an embodiment of this application;
FIG. 6 is a schematic diagram 2 of interaction of a multi-flow associated transmission method according to an embodiment of this application;
FIG. 7 is a schematic diagram of marking a boundary synchronization packet according to an embodiment of this application;
FIG. 8 is a schematic diagram of a structure of a user plane protocol stack of a 5G network according to an embodiment of this application;
FIG. 9 is a schematic flowchart 1 of a multi-flow associated transmission method according to an embodiment of this application;
FIG. 10 is a schematic flowchart 2 of a multi-flow associated transmission method according to an embodiment of this application;
FIG. 11 is a schematic flowchart 3 of a multi-flow associated transmission method according to an embodiment of this application; and
FIG. 12 is a schematic diagram of a structure of a communication apparatus according to an embodiment of this application.

### DESCRIPTION OF EMBODIMENTS

For ease of understanding solutions in embodiments of this application, related concepts are first briefly described as follows.

User plane protocol stack of a 5G network:
Before performing a data service, a terminal device needs to first register with a 5G network, and then create a protocol data unit (protocol data unit, PDU) session. Creating a PDU session means establishing a connection used for receiving and sending data. Based on a service requirement, the connection used for receiving and sending data may be an internet protocol (internet protocol, IP) connection, and a corresponding IP address is allocated by a user plane function (user plane function, UPF). Definitely, the connection used for receiving and sending data may alternatively be a non-IP connection, and the non-IP connection may be, for example, bound to a media access control (media access control, MAC) address.

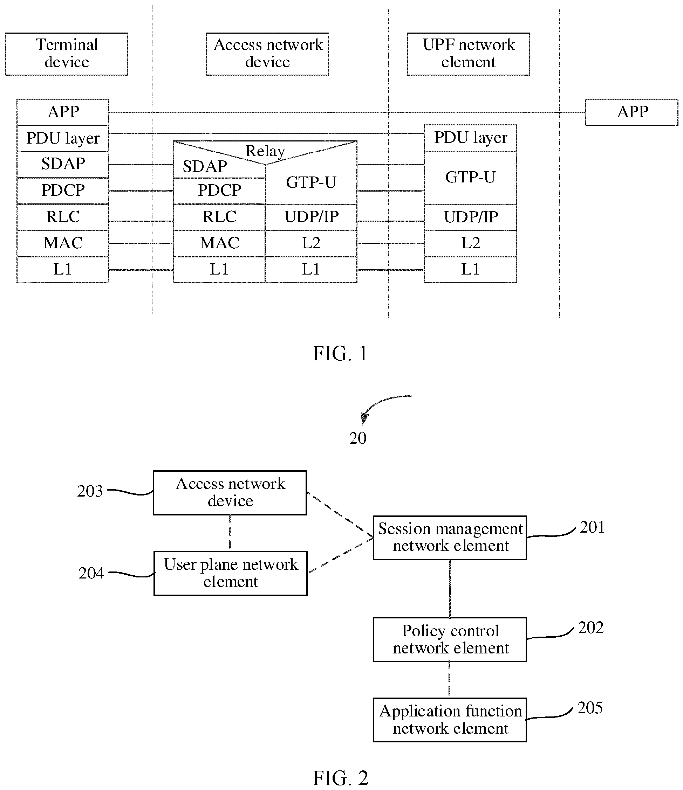

FIG. 1 shows an existing user plane protocol stack of a 5G network. A connection used for receiving and sending data is at a PDU layer, and the PDU layer is an end-to-end protocol layer from a terminal device to a UPF network element. Above the PDU layer is an application (application, APP) layer. Below the PDU layer, different 3rd generation partnership project (3rd generation partnership project, 3GPP) network protocol stacks from the terminal device to an access network device and from the access network device to the UPF network element are interconnected. Specifically, the 3GPP network protocol stack between the terminal device and the access network device includes a service data adaptation protocol (service data adaptation protocol, SDAP) layer, a packet data convergence protocol (packet data convergence protocol, PDCP) layer, and lower-layer protocol layers. The lower-layer protocol layers include a radio link control (radio link control, RLC) layer, a MAC layer, and layer 1 (level1, L1). The 3GPP network protocol stack between the access network device and the UPF network element includes a general packet radio service (General Packet Radio Service, GPRS) tunneling protocol for the user plane (GPRS tunneling protocol for the user plane, GTP-U) layer and lower-layer protocol layers, and the lower-layer protocol layers include a user datagram protocol (user datagram protocol, UDP) layer/IP layer, layer 2 (level2, L2), and L1.

In embodiments of this application, for a service packet, the access network device is unaware of the APP layer and the PDU layer. Therefore, as shown in FIG. 1, the APP layer and the PDU layer correspond to relay (relay) on the access network device side, that is, forwarding or transparent transmission. In addition, the APP layer in embodiments of this application may be considered as a load layer. This is uniformly described herein, and details are not described below.

The following describes the technical solutions in embodiments of this application with reference to the accompanying drawings in embodiments of this application. In the descriptions of this application, unless otherwise specified, "/" indicates an "or" relationship between correlated objects. For example, A/B may indicate A or B. In this application, "and/or" describes merely an association relationship between associated objects and indicates that three relationships may exist. For example, A and/or B may indicate the following three cases: Only A exists, both A and B exist, and only B exists, where A or B may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In addition, the network architecture and the service scenario described in embodiments of this application are intended to describe the technical solutions in embodiments of this application more clearly, and do not constitute any limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

FIG. 2 shows a communication system 20 according to an embodiment of this application. The communication system 20 includes a session management network element 201 and a policy control network element 202. The session management network element 201 and the policy control network element 202 may communicate with each other. "Communication" in embodiments of this application may be direct communication, or may be performed via forwarding of another device. This is uniformly described herein, and is not specifically limited in embodiments of this application.

The policy control network element 202 is configured to send first information to the session management network element 201. The first information includes a group identifier of a service flow group to which each of a plurality of service sub-flows belongs, and QoS policy information corresponding to each service sub-flow and/or QoS policy information of the service flow group to which each service sub-flow belongs. The session management network element 201 is configured to: receive the first information from the policy control network element 202; determine, based on the group identifier of the service flow group to which each service sub-flow belongs, that there is an association relationship between the plurality of service sub-flows; and guarantee associated transmission of the plurality of service sub-flows based on the QoS policy information corresponding to each service sub-flow and/or the QoS policy information of the service flow group to which each service sub-flow belongs. A specific implementation of the foregoing solution is described in detail in subsequent method embodiments, and details are not described herein again. Based on the communication system provided in embodiments of this application, the session management network element may obtain the group identifier of the service flow group to which each of the plurality of service sub-flows belongs, and the QoS policy information corresponding to each service sub-flow and/or the QoS policy information of the service flow group to which each service sub-flow belongs; and after determining, based on the group identifier of the service flow group to which each service sub-flow belongs, that there is an association relationship between the plurality of service sub-flows, guarantee associated transmission of the plurality of service sub-flows based on the QoS policy information corresponding to each service sub-flow and/or the QoS policy information of the service flow group to which each service sub-flow belongs, including bearer combination, selecting a same user plane network element and a same access network device, and the like. Therefore, a problem of a packet loss due to a buffer overflow caused when a plurality of service sub-flows between which there is association relationship are carried on different connections can be avoided, and the user plane network element or the access network device can forward, over a same forwarding path, service packets in the plurality of service sub-flows between which there is association relationship. For example, the user plane network element or the access network device may forward, via a same interface board, a same port, or the like, the service packets in the plurality of service sub-flows between which there is association relationship. In conclusion, based on the multi-flow associated transmission method provided in embodiments of this application, it can be ensured that a plurality of service sub-flows between which there is association relationship can reach a destination end as synchronously as possible when being forwarded via a mobile network, so that a packet loss caused by a buffer overflow can be avoided, a latency can be reduced, and optimal user experience and network efficiency can be ensured.

Optionally, as shown in FIG. 2, the communication system 20 may further include an access network device 203 and a user plane network element 204 that communicate with the session management network element. The access network device 203 and the user plane network element 204 may communicate with each other.

In a possible implementation, that the session management network element 201 is configured to guarantee associated transmission of the plurality of service sub-flows based on the QoS policy information corresponding to each service sub-flow and/or the QoS policy information of the service flow group to which each service sub-flow belongs includes: After determining that current user plane forwarding resources are sufficient, the session management network element 201 is configured to determine, based on the QoS policy information corresponding to each service sub-flow and/or the QoS policy information of the service flow group to which each service sub-flow belongs, to combine service packets in the plurality of service sub-flows into a first bearer for transmission. The session management network element 201 is further configured to send a QoS requirement of the first bearer to the user plane network element 204, and the session management network element 201 is further configured to send the QoS requirement of the first bearer to the access network device 203, where the QoS requirement of the first bearer is used for allocating a user plane resource of the first bearer.

In another possible implementation, that the session management network element 201 is configured to guarantee associated transmission of the plurality of service sub-flows based on the QoS policy information corresponding to each service sub-flow and/or the QoS policy information of the service flow group to which each service sub-flow belongs includes: The session management network element 201 is configured to select the same user plane network element 204 and the same access network device 203 for the plurality of service sub-flows. The session management network element 201 is further configured to determine, based on the QoS policy information corresponding to each service sub-flow and/or the QoS policy information of the service flow group to which each service sub-flow belongs, to combine service packets in the plurality of service sub-flows into m bearers for transmission, where m is a positive integer greater than 1. The session management network element 201 is further configured to send QoS requirements of the m bearers to the user plane network element 204, and the session management network element 201 is further configured to send the QoS requirements of the m bearers to the access network device 203. The QoS requirements of the m bearers are used for allocating user plane resources of the m bearers.

Optionally, in this embodiment of this application, the user plane network element 204 is further configured to: after detecting that the plurality of service sub-flows are new service sub-flows, determine, based on group identifiers of service flow groups to which the service sub-flows belong in the service packets, that there is an association relationship between the plurality of service sub-flows. The user plane network element 204 is further configured to send, to the session management network element 201, the group identifier of the service flow group to which each of the plurality of service sub-flows belongs and flow description information of each service sub-flow. The session management network element 201 is further configured to: receive, from the user plane network element 204, the group identifier of the service flow group to which each of the plurality of service sub-flows belongs and the flow description information of each service sub-flow; and send a request message to the policy control network element 202, where the request message includes the group identifier of the service flow group to which each of the plurality of service sub-flows belongs and the flow description information of each service sub-flow, and is for requesting to obtain the QoS policy information corresponding to each service sub-flow and/or the QoS policy information of the service flow group to which each service sub-flow belongs.

Optionally, as shown in FIG. 2, the communication system 20 further includes an application function network element 205 that communicates with the policy control network element 202. The application function network element 205 is configured to send second information to the policy control network element 202 after it is determined that there is an association relationship between the plurality of service sub-flows, where the second information includes the group identifier of the service flow group to which each of the plurality of service sub-flows belongs, and QoS policy information to be used for each service sub-flow and/or QoS policy information to be used for the service flow group to which each service sub-flow belongs. The policy control network element 202 is configured to receive the second information from the application function network element 205, and determine the QoS policy information corresponding to each service sub-flow and/or the QoS policy information of the service flow group to which each service sub-flow belongs in the first information based on the QoS policy information to be used for each service sub-flow and/or the QoS policy information to be used for the service flow group to which each service sub-flow belongs and based on local policy rule configuration.

Optionally, the communication system 20 shown in FIG. 2 may be applied to a current 5G network or a future network. This is not specifically limited in this embodiment of this application.

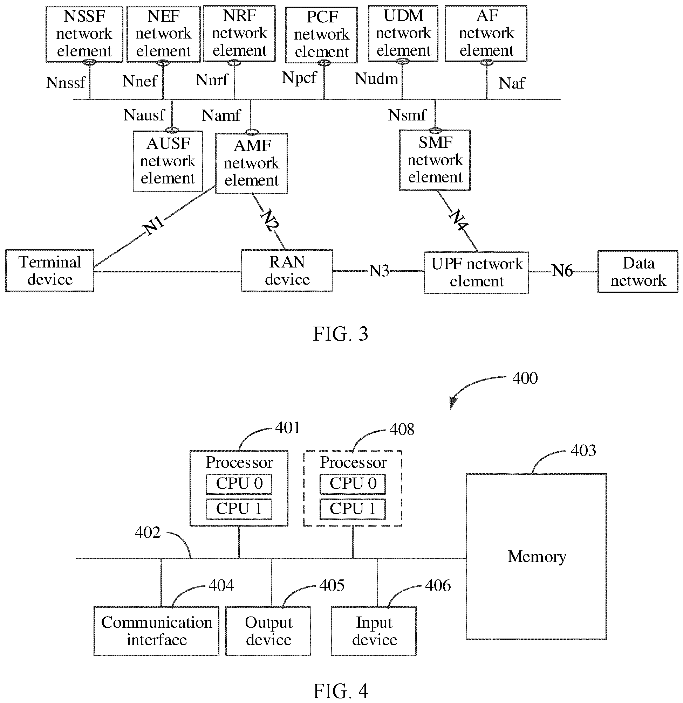

For example, as shown in FIG. 3, if the communication system 20 shown in FIG. 2 is applied to a current 5G network, a network element or an entity corresponding to the session management network element 201 in the communication system 20 shown in FIG. 2 may be a session management function (session management function, SMF) network element in a 5G network architecture, a network element or an entity corresponding to the policy control network element 202 in the communication system 20 shown in FIG. 2 may be a policy control function (policy control function, PCF) network element in the 5G network architecture, a network element or an entity corresponding to the access network device 203 in the communication system 20 shown in FIG. 2 may be a radio access network (radio access network, RAN) device in the 5G network architecture, a network element or an entity corresponding to the user plane network element 204 in the communication system 20 shown in FIG. 2 may be a UPF network element in the 5G network architecture, and a network element or an entity corresponding to the application function network element 205 in the communication system 20 shown in FIG. 2 may be an application function (application function, AF) network element in the 5G network architecture.

In addition, as shown in FIG. 3, the current 5G network may further include an access and mobility management function (core access and mobility management function, AMF) network element, an authentication server function (authentication server function, AUSF) network element, a network slice selection function (network slice selection function, NSSF) network element, a network exposure function (network exposure function, NEF) network element, a network function repository function (network exposure function Repository Function, NRF) network element, a unified data management (unified data management, UDM) network element, and the like. This is not specifically limited in this embodiment of this application.

As shown in FIG. 3, a terminal device accesses a 5G network through a RAN device, and the terminal device communicates with an AMF network element through an N1 interface (N1 for short). The RAN device communicates with the AMF network element through an N2 interface (N2 for short). The RAN device communicates with a UPF network element through an N3 interface (N3 for short), an SMF network element communicates with the UPF network element through an N4 interface (N4 for short), and the UPF network element accesses a data network through an N6 interface (N6 for short). In addition, control plane network elements such as an AUSF network element, the AMF network element, the SMF network element, an NSSF network element, an NEF network element, an NRF network element, a PCF network element, a UDM network element, or an AF network element shown in FIG. 3 may use a service-based interface for interaction. For example, a service-based interface exhibited by the AUSF network element may be Nausf; a service-based interface exhibited by the AMF network element may be Namf; a service-based interface exhibited by the SMF network element may be Nsmf; a service-based interface exhibited by the NSSF network element may be Nnssf; a service-based interface exhibited by the NEF network element may be Nnef; a service-based interface exhibited by the NRF network element may be Nnrf; a service-based interface exhibited by the PCF network element may be Npcf; a service-based interface exhibited by the UDM network element may be Nudm; and a service-based interface exhibited by the AF network element may be Naf. For related descriptions, refer to a diagram of a 5G system architecture (5G system architecture) in the 3GPP TS 23.501 standard. Details are not described herein.

Optionally, the terminal device in this embodiment of this application may be a device configured to implement a wireless communication function, for example, a terminal or a chip that may be used in the terminal. The terminal device may be deployed on land, where the deployment includes indoor or outdoor, or handheld or vehicle-mounted deployment, may be deployed on water (for example, on a ship), or may be deployed in air (for example, on an aircraft, a balloon, and a satellite). The terminal may be UE, an access terminal, a terminal unit, a terminal station, a mobile station, a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device or a wearable device, an unmanned aerial vehicle (unmanned aerial vehicle, UAV) and an unmanned aerial vehicle controller (UAV controller, UAVC), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and the like. The terminal may be mobile or at a fixed location.

Optionally, the RAN device in embodiments of this application is a device that provides a wireless communication function for the terminal device. For example, the access network device includes but is not limited to a next-generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a transmitting and receiving point (transmitting and receiving point, TRP), a transmitting point (transmitting point, TP), a mobile switching center, and the like.

In addition, for related descriptions of the UPF network element, the AUSF network element, the AMF network element, the SMF network element, the NSSF network element, the NEF network element, the NRF network element, the UDM network element, the PCF network element, or the AF network element, refer to the existing 3GPP 5G standard. Details are not described herein again.

Optionally, the user plane network element, the access network device, the session management network element, the policy control network element, or the application function network element in embodiments of this application may also be referred to as a communication apparatus or a communication device, and may be a general-purpose device or a dedicated device. This is not specifically limited in embodiments of this application.

Optionally, a related function of the user plane network element, the access network device, the session management network element, the policy control network element, or the application function network element in embodiments of this application may be implemented by one device, or may be jointly implemented by a plurality of devices, or may be implemented by one or more function modules in one device. This is not specifically limited in embodiments of this application. It may be understood that the foregoing function may be a network element in a hardware device, or may be a software function run on dedicated hardware, a combination of hardware and software, or a virtualization function instantiated on a platform (for example, a cloud platform).

For example, the related function of the user plane network element, the access network device, the session management network element, the policy control network element, or the application function network element in embodiments of this application may be implemented by the communication device 400 in FIG. 4. FIG. 4 is a schematic diagram of a structure of the communication device 400 according to an embodiment of this application. The communication device 400 includes one or more processors 401, a communication line 402, and at least one communication interface (in FIG. 4, an example in which a communication interface 404 and one processor 401 are included is merely used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path for connecting different components.

The communication interface 404 may be a transceiver module, configured to communicate with another device or a communication network, such as the Ethernet, a RAN, or a wireless local area network (wireless local area network, WLAN). For example, the transceiver module may be an apparatus such as a transceiver device or a transceiver. Optionally, the communication interface 404 may alternatively be a transceiver circuit in the processor 401, and is configured to implement signal input and signal output of the processor.

The memory 403 may be an apparatus having a storage function. The memory may be, for example, a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, this is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement the multi-flow associated transmission method provided in embodiments of this application.

Alternatively, optionally, in this embodiment of this application, the processor 401 may perform a processing-related function in the multi-flow associated transmission method provided in the following embodiments of this application. The communication interface 404 is responsible for communicating with another device or a communication network. This is not specifically limited in this embodiment of this application.

Optionally, the computer-executable instructions in this embodiment of this application may also be referred to as application program code. This is not specifically limited in this embodiment of this application.

During specific implementation, in an embodiment, the processor 401 may include one or more CPUs, for example, a CPU 0 and a CPU 1 in FIG. 4.

During specific implementation, in an embodiment, the communication device 400 may include a plurality of processors, for example, the processor 401 and a processor 408 in FIG. 4. Each of the processors may be a single-core (single-core) processor or a multi-core (multi-core) processor. The processor herein may include but is not limited to at least one of the following various computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The communication device 400 may also be referred to as a communication apparatus sometimes, and may be a general-purpose device or a dedicated device. For example, the communication device 400 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to that in FIG. 4. A type of the communication device 400 is not limited in this embodiment of this application.

With reference to the accompanying drawings, the following describes an example of the multi-flow associated transmission method provided in embodiments of this application.

It can be noted that names of messages between network elements, names of parameters in the messages, or the like in the following embodiments of this application are merely examples, and there may be other names in a specific implementation. This is not specifically limited in embodiments of this application.

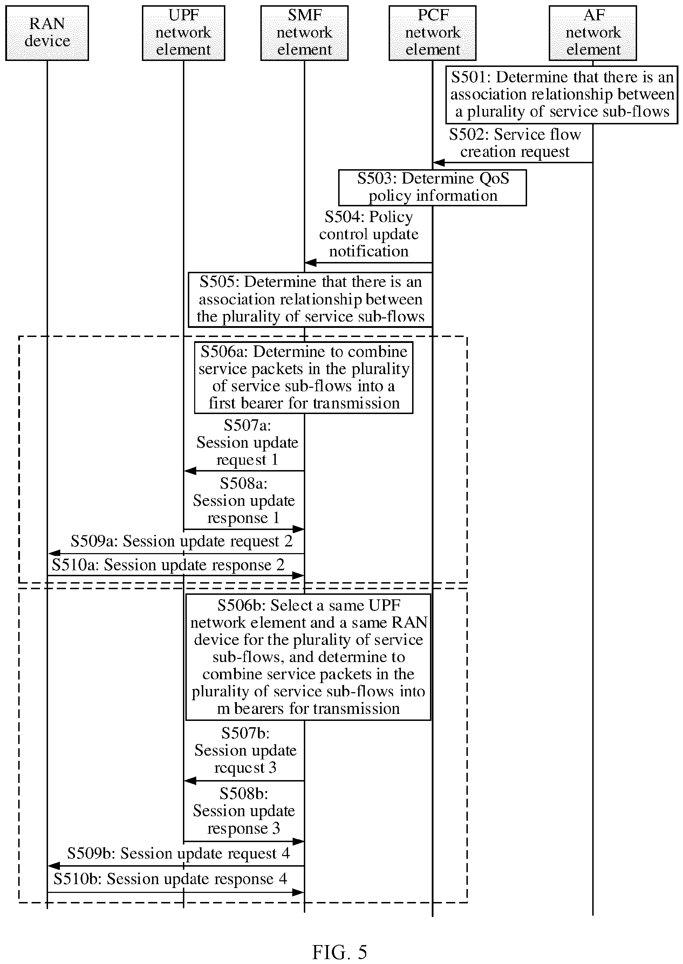

An example in which the communication system shown in FIG. 2 is applied to the 5G network shown in FIG. 3 is used. FIG. 5 shows a multi-flow associated transmission method according to an embodiment of this application. In the multi-flow associated transmission method, after receiving a message from a control plane PCF network element, a control plane SMF network element obtains related QoS policy information, and then the SMF network element initiates a user plane reconfiguration process based on the related QoS policy information, to create a user plane bearer for a plurality of service sub-flows between which there is association relationship. Specifically, as shown in FIG. 5, the multi-flow associated transmission method includes the following steps.

S501: An AF network element determines that there is an association relationship between a plurality of service sub-flows.

In this embodiment of this application, that there is an association relationship between a plurality of service sub-flows means that there is a time sequence association relationship between service packets in the plurality of service sub-flows, and it needs to be ensured that associated service packets having a same time sequence in the plurality of service sub-flows can be synchronously transmitted to a target side. For example, a plurality of service sub-flows that belong to a same holographic application are for concurrently transmitting service packets required for a plurality of sense experiences (including a visual sense, an auditory sense, a taste sense, an olfaction sense, a tactile sense, and the like), and service packets that are of a plurality of senses and that have a same time sequence in the plurality of service sub-flows need to be synchronously transmitted to a target side, and are synchronously processed by a target side application, to ensure user experience.

It can be noted that, in this embodiment of this application, the plurality of service sub-flows between which there is association relationship may belong to a same application, or may belong to different applications. This is not specifically limited in this embodiment of this application.

In this embodiment of this application, the AF network element may determine, in the following manner, that there is an association relationship between the plurality of service sub-flows: The AF network element obtains homing relationships between different service sub-flows and applications, and/or an association collaboration relationship between different applications, to determine that there is an association relationship between a plurality of concurrent service sub-flows belonging to a same application or different associated applications. Optionally, in this embodiment of this application, the AF network element may locally obtain the belonging relationships between different service sub-flows and applications, and/or the association collaboration relationship between different applications; or the AF network element may obtain the belonging relationships between different service sub-flows and applications, and/or the association collaboration relationship between different applications from another network element (for example, an application server or another AF network element). This is not specifically limited in this embodiment of this application.

S502: The AF network element sends a service flow creation request to the PCF network element. Correspondingly, the PCF network element receives the service flow creation request from the AF network element.

The service flow creation request includes flow description information (such as IP 5-tuple information) of each of the plurality of service sub-flows, a group identifier of a service flow group to which each of the service sub-flows belongs, and QoS policy information to be used for each service sub-flow and/or QoS policy information to be used for the service flow group to which each service sub-flow belongs. The service flow creation request is for notifying a mobile network to provide forwarding services for the plurality of service sub-flows between which there is association relationship.

The QoS policy information in this embodiment of this application includes but is not limited to one or more of a bandwidth, a latency, a jitter, or a packet loss rate.

Optionally, the service flow creation request in this embodiment of this application may further include charging-related information, for example, charging policy information to be used for each service sub-flow and/or charging policy information to be used for the service flow group to which each service sub-flow belongs. This is not specifically limited in this embodiment of this application.

S503: The PCF network element determines, based on the QoS policy information to be used for each service sub-flow and/or the QoS policy information to be used for the service flow group to which each service sub-flow belongs that are/is obtained from the AF network element and based on local policy rule configuration, final QoS policy information corresponding to each service sub-flow and/or QoS policy information of the service flow group to which each service sub-flow belongs.

For example, it is assumed that QoS policy information that is to be used for a service flow group to which each service sub-flow corresponding to a group identifier 1 belongs and that is obtained by the PCF network element from the AF network element includes: a guaranteed service bandwidth of 1 Gbps, a service latency of 100 ms, a packet loss rate of 0.1%, and a latency jitter of 20%. QoS policy information that is to be used for each service sub-flow corresponding to the group identifier 1 and that is obtained by the PCF network element from the AF network element includes: a service sub-flow A1 with a guaranteed bandwidth of 400 Mbps, and a latency of 50 ms;
a service sub-flow B1 with a guaranteed bandwidth of 400 Mbps;
a service sub-flow C1 with a latency of 200 ms, a latency jitter of 10%, and a packet loss rate of 0.01%.

The local policy rule configuration of the PCF network element includes: for the group identifier 1, a guaranteed service bandwidth is 1 Gbps, a service latency is 100 ms, a packet loss rate is 0.1%, and a latency jitter is 20%. In this case, final QoS policy information that is corresponding to each service sub-flow corresponding to the group identifier 1 and that is determined by the PCF network element based on the local policy rule configuration includes:
the service sub-flow A1 with a guaranteed bandwidth of 400 Mbps, a latency of 50 ms, a packet loss rate of 0.1%, and a latency jitter of 20%;
the service sub-flow B1 with a guaranteed bandwidth of 400 Mbps, a latency of 100 ms, a packet loss rate of 0.1%, and a latency jitter of 20%; and
the service sub-flow C1 with a guaranteed bandwidth of 200 Mbps, a latency of 100 ms, a packet loss rate of 0.01%, and a latency jitter of 10%.

Alternatively, for example, it is assumed that QoS policy information that is to be used for a service flow group to which each service sub-flow corresponding to a group identifier 2 belongs and that is obtained by the PCF network element from the AF network element includes: a guaranteed service bandwidth of 2 Gbps, a service latency of 200 ms, a packet loss rate of 0.01%, and a latency jitter of 20%. QoS policy information that is to be used for each service sub-flow corresponding to the group identifier 2 and that is obtained by the PCF network element from the AF network element includes: a service sub-flow A2 with a guaranteed bandwidth of 1 Gbps, and a latency of 200 ms;
a service sub-flow B2 with a latency of 200 ms, a packet loss rate of 0.1%, and a latency jitter of 50%; and
a service sub-flow C2 with a packet loss rate of 0.01%, and a latency jitter of 20%.

The local policy rule configuration of the PCF network element includes: for a service sub-flow of the group identifier 2, a latency jitter is 50%, a packet loss rate is 0.1%, a service latency of a VIP user number segment is 100 ms. A user corresponding to the QoS policy information obtained by the PCF network element from the AF network element is a VIP user. In this case, QoS policy information that is of the service flow group to which each service sub-flow corresponding to the group identifier 2 belongs and that is determined by the PCF network element based on the local policy rule configuration includes: a guaranteed service bandwidth of 2 Gbps, a service latency of 100 ms, a packet loss rate of 0.1%, and a latency jitter of 50%. Final QoS policy information that is corresponding to each service sub-flow corresponding to the group identifier 2 and that is determined by the PCF network element based on the local policy rule configuration includes: the service sub-flow A2 with a guaranteed bandwidth of 1 Gbps, a latency of 100 ms, a packet loss rate of 0.1%, and a latency jitter of 50%;
the service sub-flow B2 with a guaranteed bandwidth of 500 Mbps, a latency of 100 ms, a packet loss rate of 0.1%, and a latency jitter of 50%; and
the service sub-flow C2 with a guaranteed bandwidth of 500 Mbps, a latency of 100 ms, a packet loss rate of 0.01%, and a latency jitter of 20%.

In conclusion, in this embodiment of this application, a negotiation generation principle of QoS policy information is as follows: If the local policy rule configuration conflicts with the QoS policy information obtained by the PCF network element from the AF network element, a priority of the local policy rule configuration is higher than a priority of the QoS policy information obtained by the PCF network element from the AF network element. When QoS policy information of a service flow group to which a service sub-flow belongs and QoS policy information corresponding to the service sub-flow that are obtained by the PCF network element from the AF network element include a same parameter (for example, a bandwidth, a latency jitter, or a packet loss rate), a parameter with a higher requirement is selected, as a parameter in final QoS policy information corresponding to the service sub-flow, from corresponding parameters in the QoS policy information of the service flow group to which the service sub-flow belongs and the QoS policy information corresponding to the service sub-flow that are obtained by the PCF network element from the AF network element.

Optionally, in this embodiment of this application, when the service flow creation request includes the charging policy information to be used for each service sub-flow and/or the charging policy information to be used for the service flow group to which each service sub-flow belongs, the PCF network element further determines, based on the charging policy information to be used for each service sub-flow and/or the charging policy information to be used for the service flow group to which each service sub-flow belongs that are/is obtained from the AF network element and based on the local policy rule configuration, final charging policy information of each service sub-flow and/or final charging policy information of the service flow group to which each service sub-flow belongs.

For example, it is assumed that charging policy information that is to be used for a service flow group to which each service sub-flow corresponding to a group identifier 1 belongs and that is obtained by the PCF network element from the AF network element includes: collecting statistics on traffic. Charging policy information that is to be used for each service sub-flow corresponding to the group identifier 1 and that is obtained by the PCF network element from the AF network element includes:
a service sub-flow A1: collecting statistics on traffic, and reporting a traffic occurrence location and time segment (busy and idle periods);
a service sub-flow B 1: collecting statistics on duration; and
a service sub-flow C1: none.

The local policy rule configuration of the PCF network element includes: for the group identifier 1, collecting statistics on traffic and duration, and reporting a traffic location. In this case, final charging policy information that is of the service flow group to which each service sub-flow corresponding to the group identifier 1 belongs and that is determined by the PCF network element based on the local policy rule configuration includes: collecting statistics on traffic and duration, and reporting a traffic occurrence location. Final charging policy information that is of each service sub-flow corresponding to a group identifier 1 and that is determined by the PCF network element based on the local policy rule configuration includes:
the service sub-flow A1: collecting statistics on traffic and duration, and reporting a traffic occurrence location and time segment;
the service sub-flow B1: collecting statistics on traffic and duration, and reporting a traffic occurrence location; and
the service sub-flow C1: collecting statistics on traffic and duration, and reporting a traffic occurrence location.

In conclusion, in this embodiment of this application, a negotiation generation principle of the charging policy information is as follows: If the local policy rule configuration conflicts with the charging policy information obtained by the PCF network element from the AF network element, a priority of the local policy rule configuration is higher than a priority of the charging policy information obtained by the PCF network element from the AF network element. When charging policy information of a service flow group to which a service sub-flow belongs and charging policy information corresponding to the service sub-flow that are obtained by the PCF network element from the AF network element include a same parameter, a parameter with a higher requirement is selected, as a parameter in final charging policy information corresponding to the service sub-flow, from corresponding parameters in the charging policy information of the service flow group to which the service sub-flow belongs and the charging policy information corresponding to the service sub-flow that are obtained by the PCF network element from the AF network element.

S504: The PCF network element sends a policy control update notification to the SMF network element. Correspondingly, the SMF network element receives the policy control update notification from the PCF network element.

The policy control update notification includes first information, and the first information includes the group identifier of the service flow group to which each of the plurality of service sub-flows belongs, and the QoS policy information corresponding to each service sub-flow and/or the QoS policy information of the service flow group to which each service sub-flow belongs.

Certainly, the policy control update notification in this embodiment of this application further includes the flow description information of each service sub-flow, and the like. This is not specifically limited in this embodiment of this application.

Optionally, in this embodiment of this application, when the final charging policy information of each service sub-flow and/or the final charging policy information of the service flow group to which each service sub-flow belongs are determined in step S503, the policy control update notification may further include the charging policy information of each service sub-flow and/or the charging policy information of the service flow group to which each service sub-flow belongs.

S505: The SMF network element determines, based on the group identifier of the service flow group to which each service sub-flow belongs, that there is an association relationship between the plurality of service sub-flows.

In this embodiment of this application, service flow groups to which the plurality of service sub-flows between which there is association relationship belong have a same group identifier.

Further, in this embodiment of this application, after determining that there is an association relationship between the plurality of service sub-flows, the SMF network element may guarantee associated transmission of the plurality of service sub-flows based on the QoS policy information corresponding to each service sub-flow and/or the QoS policy information of the service flow group to which each service sub-flow belongs. This embodiment of this application provides the following two possible manners of guaranteeing associated transmission of the plurality of service sub-flows.

In a possible implementation, as shown in FIG. 5, the multi-flow associated transmission method provided in this embodiment of this application further includes the following steps S506a to S510a.

S506a: After determining that current user plane forwarding resources are sufficient, the SMF network element determines, based on the QoS policy information corresponding to each service sub-flow and/or the QoS policy information of the service flow group to which each service sub-flow belongs, to combine service packets in the plurality of service sub-flows into a first bearer for transmission.

In this embodiment of this application, a QoS requirement of the first bearer includes at least one of the following: a bandwidth of the first bearer, a latency of the first bearer, a jitter of the first bearer, or a packet loss rate of the first bearer.

The bandwidth of the first bearer is a sum of bandwidths in the QoS policy information of all the service sub-flows in the plurality of service sub-flows, or the bandwidth of the first bearer is a bandwidth in the QoS policy information of the service flow group to which each service sub-flow belongs.

The latency of the first bearer is a smallest value of latencies in the QoS policy information of all the service sub-flows in the plurality of service sub-flows, or the latency of the first bearer is a latency in the QoS policy information of the service flow group to which each service sub-flow belongs.

The jitter of the first bearer is a smallest value of jitters in the QoS policy information of all the service sub-flows in the plurality of service sub-flows, or the jitter of the first bearer is a jitter in the QoS policy information of the service flow group to which each service sub-flow belongs.

The packet loss rate of the first bearer is a smallest value of packet loss rates in the QoS policy information of all the service sub-flows in the plurality of service sub-flows, or the packet loss rate of the first bearer is a packet loss rate in the QoS policy information of the service flow group to which each service sub-flow belongs.

Optionally, in this embodiment of this application, when the first information includes the QoS policy information corresponding to each service sub-flow and the QoS policy information of the service flow group to which each service sub-flow belongs, in a process of determining the QoS requirement of the first bearer, it may be first determined whether the QoS policy information of the service flow group to which each service sub-flow belongs includes a related parameter (such as a bandwidth, a latency, a jitter, or a packet loss rate). When the QoS policy information of the service flow group to which each service sub-flow belongs includes the related parameter, the related parameter in the QoS policy information of the service flow group to which each service sub-flow belongs is determined as a parameter in the QoS requirement of the first bearer. When the QoS policy information of the service flow group to which each service sub-flow belongs does not include the related parameter, the parameter in the QoS requirement of the first bearer may be determined based on the QoS policy information corresponding to each service sub-flow. This is uniformly described herein, and details are not described below.

Optionally, in this embodiment of this application, when the policy control update notification further includes the charging policy information of each service sub-flow and/or the charging policy information of the service flow group to which each service sub-flow belongs, the SMF network element may further determine a charging policy of the first bearer based on the charging policy information of each service sub-flow and/or the charging policy information of the service flow group to which each service sub-flow belongs.

For example, the SMF network element may select a full set of charging policies of all the service sub-flows and a charging policy of the service flow group to which each service sub-flow belongs as the charging policy of the first bearer. For example, it is assumed that the charging policy information of the service flow group delivered by the PCF network element includes: for a group identifier 1, collecting statistics on traffic and duration, and reporting a traffic occurrence location. The charging policy information of the service sub-flows delivered by the PCF network element includes:
a service sub-flow A1: collecting statistics on traffic and duration, and reporting a traffic occurrence location and time segment;
a service sub-flow B1: collecting statistics on traffic and duration, and reporting a traffic occurrence location; and
a service sub-flow C1: collecting statistics on traffic and duration, and reporting a traffic occurrence location.

In this case, the SMF network element may determine that the charging policy of the first bearer is collecting statistics on traffic and duration, and reporting a traffic occurrence location and time segment.

S507a: The SMF network element sends a session update request 1 to a UPF network element. Correspondingly, the UPF network element receives the session update request 1 from the SMF network element.

The session update request 1 includes the QoS requirement of the first bearer, and the QoS requirement of the first bearer is used by the UPF network element to allocate a user plane resource to the first bearer.

Optionally, in this embodiment of this application, when the first information includes the QoS policy information corresponding to each service sub-flow, the session update request 1 may further include the flow description information of each service sub-flow and the QoS policy information corresponding to each service sub-flow. The QoS policy information corresponding to each service sub-flow is used by the UPF network element to further allocate a user plane resource to each service sub-flow in the user plane resource allocated to the first bearer. For example, if the SMF network element determines to combine a service sub-flow 1 and a service sub-flow 2 into a bearer 1 for transmission, QoS policy information corresponding to the service sub-flow 1 is used by the UPF network element to further allocate a user plane resource to the service sub-flow 1 in a user plane resource allocated to the bearer 1, and QoS policy information corresponding to the service sub-flow 2 is used by the UPF network element to further allocate a user plane resource to the service sub-flow 2 in the user plane resource allocated to the bearer 1. In other words, in this embodiment of this application, user plane resources can be allocated at a finer granularity, so that a problem of user plane resource preemption between service sub-flows in a process of guaranteeing associated transmission of a plurality of service sub-flows can be avoided. In this embodiment of this application, for a manner in which the UPF network element allocates the user plane resource to the first bearer based on the QoS requirement of the first bearer or a manner in which the UPF network element further allocates the user plane resource to each service sub-flow based on the QoS policy information corresponding to each service sub-flow, refer to the conventional technology. Details are not described herein again.

Optionally, in this embodiment of this application, if the SMF network element may determine the charging policy of the first bearer in step S506a, the session update request 1 may further include the charging policy of the first bearer, so that the UPF network element can subsequently perform related charging based on the charging policy of the first bearer. This is not specifically limited in this embodiment of this application.

In addition, in this embodiment of this application, the UPF network element may further configure a data channel for the first bearer, for example, a general packet radio service (general packet radio service, GPRS) tunneling protocol (GPRS tunneling protocol, GTP) tunnel. For related implementation, refer to the conventional technology. Details are not described herein again.

Further, after allocating the user plane resource to the first bearer, the UPF network element may perform step S508a.

S508a: The UPF network element sends a session update response 1 to the SMF network element. Correspondingly, the SMF network element receives the session update response 1 from the UPF network element.

S509a: The SMF network element sends a session update request 2 to the RAN device. Correspondingly, the RAN device receives the session update request 2 from the SMF network element.

The session update request 2 includes the QoS requirement of the first bearer, and the QoS requirement of the first bearer is used by the RAN device to allocate a user plane resource to the first bearer.

In this embodiment of this application, for a manner in which the RAN device allocates the user plane resource to the first bearer based on the QoS requirement of the first bearer, refer to the conventional technology. Details are not described herein again. Further, after allocating the user plane resource to the first bearer, the RAN device may perform step S510a.

S510a: The RAN device sends a session update response 2 to the SMF network element. Correspondingly, the SMF network element receives the session update response 2 from the RAN device.

It can be noted that, in this embodiment of this application, there is no necessary execution sequence between step S507a and step S509a. Step S507a may be performed before step S509a; step S509a may be performed before step S507a; or step S507a and step S509a may be simultaneously performed. This is not specifically limited in this embodiment of this application.

In another possible implementation, as shown in FIG. 5, the multi-flow associated transmission method provided in this embodiment of this application further includes the following steps S506b to S510b.

S506b: The SMF network element selects a same UPF network element and a same RAN device for the plurality of service sub-flows, and the SMF network element determines, based on the QoS policy information corresponding to each service sub-flow and/or the QoS policy information of the service flow group to which each service sub-flow belongs, to combine service packets in the plurality of service sub-flows into m bearers for transmission, where m is a positive integer greater than 1.

The following uses an example in which the first information includes the QoS policy information corresponding to each service sub-flow to describe the m bearers in two types.

Type 1: The m bearers include a second bearer, where the second bearer is any one of the m bearers that is for transmitting service packets in n service sub-flows in the plurality of service sub-flows, and n is a positive integer greater than 1. That is, the second bearer carries service packets in more than one service sub-flow. In this case, a QoS requirement of the second bearer includes at least one of the following: a bandwidth of the second bearer, a latency of the second bearer, a jitter of the second bearer, or a packet loss rate of the second bearer.

The bandwidth of the second bearer is a sum of bandwidths in QoS policy information of all the n service sub-flows.

The latency of the second bearer is a smallest value of latencies in the QoS policy information of all the n service sub-flows, or the latency of the second bearer is a latency in the QoS policy information of the service flow group to which each service sub-flow belongs.

The jitter of the second bearer is a smallest value of jitters in the QoS policy information of all the n service sub-flows, or the jitter of the second bearer is a jitter in the QoS policy information of the service flow group to which each service sub-flow belongs.

The packet loss rate of the second bearer is a smallest value of packet loss rates in the QoS policy information of all the n service sub-flows, or the packet loss rate of the second bearer is a packet loss rate in the QoS policy information of the service flow group to which each service sub-flow belongs.

Type 2: The m bearers include a third bearer, and the third bearer is any one of the m bearers that is for transmitting a service packet in one of the plurality of service sub-flows. That is, the third bearer carries a service packet in one service sub-flow. In this case, a QoS requirement of the third bearer includes at least one of the following: a bandwidth of the third bearer, a latency of the third bearer, a jitter of the third bearer, or a packet loss rate of the third bearer.

The bandwidth of the third bearer is a bandwidth in QoS policy information of one of the plurality of service sub-flows.

The latency of the third bearer is a latency in the QoS policy information of one of the plurality of service sub-flows, or the latency of the third bearer is a latency in the QoS policy information of the service flow group to which each service sub-flow belongs.

The jitter of the third bearer is a jitter in the QoS policy information of one of the plurality of service sub-flows, or the jitter of the third bearer is a jitter in the QoS policy information of the service flow group to which each service sub-flow belongs.

The packet loss rate of the third bearer is a packet loss rate in the QoS policy information of one of the plurality of service sub-flows, or the packet loss rate of the third bearer is a packet loss rate in the QoS policy information of the service flow group to which each service sub-flow belongs.

Optionally, in this embodiment of this application, in a process of determining the QoS requirement of the second bearer or the third bearer, for another QoS requirement other than the bandwidth, whether the QoS policy information of the service flow group to which each service sub-flow belongs includes a related parameter (for example, a latency, a jitter, or a packet loss rate) may be first determined. When the QoS policy information of the service flow group to which each service sub-flow belongs includes the related parameter, the related parameter in the QoS policy information of the service flow group to which each service sub-flow belongs is determined as a parameter in the QoS requirement of the second bearer or the third bearer. When the QoS policy information of the service flow group to which each service sub-flow belongs does not include the related parameter, the parameter in the QoS requirement of the second bearer or the third bearer may be determined based on the QoS policy information corresponding to each service sub-flow. This is uniformly described herein, and details are not described below.

Optionally, in this embodiment of this application, when the policy control update notification further includes the charging policy information of each service sub-flow and/or the charging policy information of the service flow group to which each service sub-flow belongs, for each of the m bearers, the SMF network element may further determine a charging policy of the bearer based on charging policy information of each service sub-flow corresponding to the bearer and/or the charging policy information of the service flow group to which each service sub-flow belongs. For a relevant example, refer to step S506a. Details are not described herein again.

S507b: The SMF network element sends a session update request 3 to the UPF network element. Correspondingly, the UPF network element receives the session update request 3 from the SMF network element.

The session update request 3 includes QoS requirements of the m bearers, and the QoS requirements of the m bearers are used by the UPF network element to allocate user plane resources to the m bearers.

Optionally, in this embodiment of this application, when the first information includes the QoS policy information corresponding to each service sub-flow, the session update request 3 may further include the flow description information of each service sub-flow and the QoS policy information corresponding to each service sub-flow. The QoS policy information corresponding to each service sub-flow is used by the UPF network element to further allocate a user plane resource to each service sub-flow in the user plane resources allocated to the m bearers. For example, the SMF network element determines to combine a service sub-flow 1 and a service sub-flow 2 into a bearer 1 for transmission, and combine a service sub-flow 3 and a service sub-flow 4 into a bearer 2 for transmission. In this case, QoS policy information corresponding to the service sub-flow 1 is used by the UPF network element to further allocate a user plane resource to the service sub-flow 1 in user plane resources allocated to the bearer 1, QoS policy information corresponding to the service sub-flow 2 is used by the UPF network element to further allocate a user plane resource to the service sub-flow 2 in the user plane resources allocated to the bearer 1, QoS policy information corresponding to the service sub-flow 3 is used by the UPF network element to further allocate a user plane resource to the service sub-flow 3 in user plane resources allocated to the bearer 2, and QoS policy information corresponding to the service sub-flow 4 is used by the UPF network element to further allocate a user plane resource to the service sub-flow 4 in the user plane resources allocated to the bearer 2. In other words, in this embodiment of this application, user plane resources can be allocated at a finer granularity, so that a problem of user plane resource preemption between service sub-flows in a process of guaranteeing associated transmission of a plurality of service sub-flows can be avoided. In this embodiment of this application, for a manner in which the UPF network element allocates a user plane resource to a bearer based on a QoS requirement of the bearer or a manner in which the UPF network element further allocates the user plane resource to each service sub-flow based on the QoS policy information corresponding to each service sub-flow, refer to the conventional technology. Details are not described herein again.

Optionally, in this embodiment of this application, if the SMF network element may determine charging policies of the m bearers in step S507a, the session update request 3 may further include the charging policies of the m bearers, so that the UPF network element may subsequently perform related charging based on the charging policies of the m bearers. This is not specifically limited in this embodiment of this application.

In addition, in this embodiment of this application, the UPF network element may further configure a data channel, such as a GTP tunnel, for the m bearers. For related implementation, refer to the conventional technology. Details are not described herein.

Further, after allocating the user plane resources to the m bearers, the UPF network element may perform step S508b.

S508b: The UPF network element sends a session update response 3 to the SMF network element. Correspondingly, the SMF network element receives the session update response 3 from the UPF network element.

S509b: The SMF network element sends a session update request 4 to the RAN device. Correspondingly, the RAN device receives the session update request 4 from the SMF network element.

The session update request 4 includes QoS requirements of the m bearers, and the QoS requirements of the m bearers are used by the RAN device to allocate user plane resources to the m bearers.

In this embodiment of this application, for a manner in which the RAN device allocates a user plane resource to a bearer based on a QoS requirement of the bearer, refer to the conventional technology. Details are not described herein again. Further, after allocating the user plane resources to the m bearers, the RAN device may perform step S510b.

S510b: The RAN device sends a session update response 4 to the SMF network element. Correspondingly, the SMF network element receives the session update response 4 from the RAN device.

It can be noted that, in this embodiment of this application, there is no necessary execution sequence between step S507b and step S509b. Step S507b may be performed before step S509b; step S509b may be performed before step S509b; or step S507b and step S509b may be simultaneously performed. This is not specifically limited in this embodiment of this application.

Further, in this embodiment of this application, to ensure that a same path can be used for transmission at the IP transport layer, the SMF network element may further allocate a same path identifier to the plurality of service sub-flows between which there is association relationship. The path identifier identifies an IP transport layer transmission path between the UPF network element and the RAN device. Further, the session update request 1 and the session update request 2 further include the path identifier, or the session update request 3 and the session update request 4 further include the path identifier. In this way, when forwarding a service packet, the UPF network element or the RAN device may add the foregoing path identifier to the service packet in a GTP-U packet header or a PDCP packet header. Further, the lower-layer IP transport layer may ensure, based on the path identifier, that service packets marked with the same path identifier are forwarded through a same path, for example, forwarded through a same routing and switching device, and forwarded through a same interface board and a same port inside a same network element.

It can be noted that, in this embodiment of this application, the AF network element may directly interact with the PCF, to indicate the mobile network to provide a forwarding service for the plurality of service sub-flows between which there is association relationship. Certainly, there may be no direct interface between the AF network element and the PCF. In this case, the AF network element may interact with the PCF via the NEF network element, to indicate the mobile network to provide a forwarding service for the plurality of service sub-flows between which there is association relationship. Alternatively, the AF may update, by using the NEF network element, service policy configuration stored in a UDR network element, to trigger the UDR network element to indicate the mobile network to provide a forwarding service for the plurality of service sub-flows between which there is association relationship. In the foregoing method, only interfaces and methods for notifying the PCF network element by the AF network element are different, and notification purposes and information are the same. Details are not described herein again in this embodiment of this application.

According to the multi-flow associated transmission method provided in this embodiment of this application, the SMF network element may obtain the group identifier of the service flow group to which each of the plurality of service sub-flows belongs, and the QoS policy information corresponding to each service sub-flow and/or the QoS policy information of the service flow group to which each service sub-flow belongs; and after determining, based on the group identifier of the service flow group to which each service sub-flow belongs, that there is an association relationship between the plurality of service sub-flows, guarantee associated transmission of the plurality of service sub-flows based on the QoS policy information corresponding to each service sub-flow and/or the QoS policy information of the service flow group to which each service sub-flow belongs, including bearer combination, selecting a same UPF network element and a same RAN device, and the like. Therefore, a problem of a packet loss due to a buffer overflow caused when a plurality of service sub-flows between which there is association relationship are carried on different connections can be avoided, and the UPF network element or the RAN device can forward, over a same forwarding path, the service packets in the plurality of service sub-flows between which there is association relationship. For example, the UPF network element or the RAN device may forward, via a same interface board, a same port, or the like, the service packets in the plurality of service sub-flows between which there is association relationship. In conclusion, based on the multi-flow associated transmission method provided in embodiments of this application, it can be ensured that a plurality of service sub-flows between which there is association relationship can reach a destination end as synchronously as possible when being forwarded via a mobile network, so that a packet loss caused by a buffer overflow can be avoided, a latency can be reduced, and optimal user experience and network efficiency can be ensured.

The actions of the AF network element, the SMF network element, or the PCF network element in steps S501 to S510a or S510b may be performed by the processor 401 in the communication device 400 shown in FIG. 4 by invoking the application program code stored in the memory 403, to indicate the AF network element, the SMF network element, or the PCF network element to perform the actions. This is not limited in this embodiment.

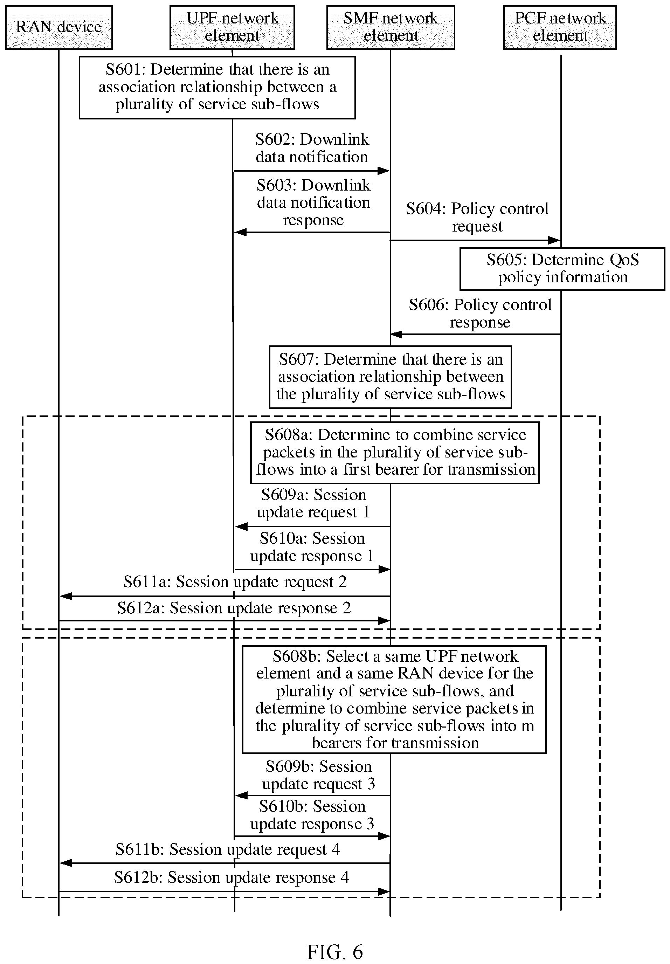

Optionally, that the communication system shown in FIG. 2 is applied to the 5G network shown in FIG. 3 is used as an example. FIG. 6 shows a multi-flow associated transmission method according to an embodiment of this application. In the multi-flow associated transmission method, an application layer adds a same group identifier to service packets in different service sub-flows between which there is association relationship. Using initiating a holographic call as an example, a group identifier of a service flow group to which service sub-flows allocated by the application layer belong is 1. Although IP 5-tuple information in service packets in an audio stream, a video stream, a tactile stream, a taste stream, and an olfaction stream may be different, the service packets all include one piece of group identifier information whose value is equal to 1. When downlink service packets in the service sub-flows arrive at a UPF network element, the UPF network element identifies that the service packets in the plurality of service sub-flows between which there is association relationship need to be forwarded, and sends a report to an SMF network element on a control plane. After the SMF network element interacts with a PCF network element to obtain related QoS policy information, the SMF network element initiates a user plane reconfiguration process based on the related QoS policy information, to create a user plane bearer for the plurality of service sub-flows between which there is association relationship. Specifically, as shown in FIG. 6, the multi-flow associated transmission method includes the following steps.

S601: After downlink service packets in a plurality of service sub-flows arrive at the UPF network element and the UPF network element detects that the plurality of service sub-flows are new service sub-flows, the UPF network element determines, based on group identifiers of service flow groups to which the service sub-flows belong in the service packets, that there is an association relationship between the plurality of service sub-flows.

In this embodiment of this application, the service flow groups to which the plurality of service sub-flows between which there is association relationship belong have a same group identifier.

In this embodiment of this application, for example, a manner in which the UPF network element detects that the service sub-flows are new service sub-flows may be: The UPF network element determines that a data feature of the service packets in the service sub-flows does not match a data feature corresponding to any currently established bearer.

S602: The UPF network element sends a downlink data notification to the SMF network element. Correspondingly, the SMF network element receives the downlink data notification from the UPF network element.

The downlink data notification includes flow description information (for example, IP 5-tuple information) of each service sub-flow in the plurality of detected service sub-flows and a group identifier of a service flow group to which each service sub-flow belongs.

S603: The SMF network element sends a downlink data notification response to the UPF network element. Correspondingly, the UPF network element receives the downlink data notification response from the SMF network element.

S604: The SMF network element sends a policy control request to the PCF network element. Correspondingly, the PCF network element receives the policy control request from the SMF network element.

The policy control request includes the flow description information (for example, IP 5-tuple information) of each of the plurality of service sub-flows and the group identifier of the service flow group to which each service sub-flow belongs.

S605: The PCF network element queries and matches a configured policy rule based on the flow description information (such as IP 5-tuple information) of each service sub-flow and the group identifier of the service flow group to which each service sub-flow belongs, to obtain QoS policy information corresponding to each of the plurality of service sub-flows and/or QoS policy information to be used for the service flow group to which each service sub-flow belongs.

Optionally, in this embodiment of this application, the PCF network element may further query and match a configured policy rule based on the flow description information (such as IP 5-tuple information) of each service sub-flow and the group identifier of the service flow group to which each service sub-flow belongs, to obtain charging policy information of each of the plurality of service sub-flows and/or charging policy information of the service flow group to which each service sub-flow belongs.

S606: The PCF network element sends a policy control response to the SMF network element. Correspondingly, the SMF network element receives the policy control response from the PCF network element.

The policy control response includes first information, and the first information includes the group identifier of the service flow group to which each of the plurality of service sub-flows belongs, and the QoS policy information corresponding to each service sub-flow and/or the QoS policy information of the service flow group to which each service sub-flow belongs.

Certainly, the policy control response in this embodiment of this application further includes the flow description information of each service sub-flow, and the like. This is not specifically limited in this embodiment of this application.

Optionally, in this embodiment of this application, when the charging policy information of each service sub-flow and/or the charging policy information of the service flow group to which each service sub-flow belongs are/is determined in step S605, the policy control response may further include the charging policy information of each service sub-flow and/or the charging policy information of the service flow group to which each service sub-flow belongs.

S607: The SMF network element determines, based on the group identifier of the service flow group to which each service sub-flow belongs, that there is an association relationship between the plurality of service sub-flows.

In this embodiment of this application, the service flow groups to which the plurality of service sub-flows between which there is association relationship belong have a same group identifier.

Further, in this embodiment of this application, the SMF network element may guarantee associated transmission of the plurality of service sub-flows based on the QoS policy information corresponding to each service sub-flow and/or the QoS policy information of the service flow group to which each service sub-flow belongs. This embodiment of this application provides the following two possible manners of guaranteeing associated transmission of the plurality of service sub-flows.

In a possible implementation, as shown in FIG. 6, the multi-flow associated transmission method provided in this embodiment of this application further includes the following steps S608a to S612a.

S608a to S612a are the same as steps S506a to S510a in the embodiment shown in FIG. 5. For related descriptions, refer to the embodiment shown in FIG. 5. Details are not described herein again.

In another possible implementation, as shown in FIG. 6, the multi-flow associated transmission method provided in this embodiment of this application further includes the following steps S608b to S612b.

S608b to S612b are the same as steps S506b to S510b in the embodiment shown in FIG. 5. For related descriptions, refer to the embodiment shown in FIG. 5. Details are not described herein again.

Further, in this embodiment of this application, to ensure that a same path can be used for transmission at the IP transport layer, the SMF network element may further allocate a same path identifier to the plurality of service sub-flows between which there is association relationship. The path identifier identifies an IP transport layer transmission path between the UPF network element and the RAN device. Further, the session update request 1 and the session update request 2 further include the path identifier, or the session update request 3 and the session update request 4 further include the path identifier. In this way, when forwarding a service packet, the UPF network element or the RAN device may add the foregoing path identifier to the service packet in a GTP-U packet header or a PDCP packet header. Further, the lower-layer IP transport layer may ensure, based on the path identifier, that service packets marked with the same path identifier are forwarded over a same path, for example, forwarded over a same routing and switching device, and forwarded through a same interface board and a same port inside a same network element.

According to the multi-flow associated transmission method provided in this embodiment of this application, the SMF network element may obtain the group identifier of the service flow group to which each of the plurality of service sub-flows belongs, and the QoS policy information corresponding to each service sub-flow and/or the QoS policy information of the service flow group to which each service sub-flow belongs; and after determining, based on the group identifier of the service flow group to which each service sub-flow belongs, that there is an association relationship between the plurality of service sub-flows, guarantee associated transmission of the plurality of service sub-flows based on the QoS policy information corresponding to each service sub-flow and/or the QoS policy information of the service flow group to which each service sub-flow belongs, including bearer combination, selecting a same UPF network element and a same RAN device, and the like. Therefore, a problem of a packet loss due to a buffer overflow caused when a plurality of service sub-flows between which there is association relationship may be carried on different connections can be avoided, and the UPF network element or the RAN device can forward, over a same forwarding path, the service packets in the plurality of service sub-flows between which there is association relationship. For example, the UPF network element or the RAN device may forward, via a same interface board, a same port, or the like, the service packets in the plurality of service sub-flows between which there is association relationship. In conclusion, based on the multi-flow associated transmission method provided in embodiments of this application, it can be ensured that a plurality of service sub-flows between which there is association relationship can reach a destination end as synchronously as possible when being forwarded via a mobile network, so that a packet loss caused by a buffer overflow can be avoided, a latency can be reduced, and optimal user experience and network efficiency can be ensured.

The actions of the UPF network element, the SMF network element, or the PCF network element in steps S601 to S612a or S612b may be performed by the processor 401 in the communication device 400 shown in FIG. 4 by invoking the application program code stored in the memory 403, to indicate the UPF network element, the SMF network element, or the PCF network element to perform the actions. This is not limited in this embodiment.

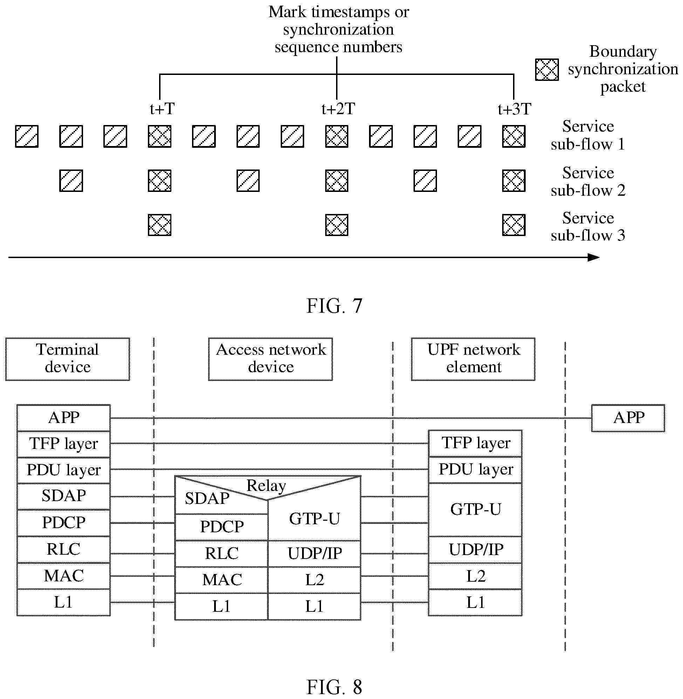

Optionally, embodiments of this application may further provide a multi-flow associated transmission method. In the multi-flow associated transmission method, a mobile network actively monitors a transmission synchronization status of service packets in a plurality of service sub-flows between which there is association relationship. When a service packet that is transmitted at a slowest speed in the service packets in the different service sub-flows between which there is association relationship lags behind a service packet that is transmitted at a fastest speed by a specific threshold, a corresponding scheduling measure is taken to ensure that transmission of the service packets in all the associated service sub-flows is synchronized as much as possible. Therefore, an application layer needs to add a same group identifier to the service packets in the different service sub-flows between which there is association relationship. Using initiating a holographic call as an example, a group identifier of a service flow group to which service sub-flows allocated by the application layer belong is 1. Although IP 5-tuple information in service packets in an audio stream, a video stream, a tactile stream, a taste stream, and an olfaction stream may be different, the service packets all include one piece of group identifier information whose value is equal to 1. In addition, the application layer needs to mark a key synchronization packet in the service packet in each service sub-flow as a synchronization point for associating different service sub-flows, so as to ensure synchronous transmission of the service packets in the service sub-flows. For example, as shown in FIG. 7, key boundary packets (for example, packets at a moment t+T, a moment t+2T, and a moment t+3T in FIG. 7) are selected from service packets in a service sub-flow 1, service packets in a service sub-flow 2, and service packets in a service sub-flow 3, and timestamps or synchronization sequence numbers are marked. In this way, the mobile network determines, based on the timestamps or synchronization sequence number information of the key boundary packets, whether transmission statuses of the service packets in the service sub-flows are synchronized, and takes corresponding scheduling measures to ensure that the transmission of the service packets in the associated service sub-flows is synchronized as much as possible.

For example, the multi-flow associated transmission method is applied to the UPF network element in the 5G network shown in FIG. 3. FIG. 8 shows a user plane protocol stack of a 5G network according to an embodiment of this application. Different from the user plane protocol stack of the 5G network shown in FIG. 1, in this embodiment of this application, a peer protocol layer is defined between a terminal device and the UPF network element, for example, a traffic flow protocol (traffic flow protocol, TFP) layer in FIG. 8. The TFP layer is above a PDU layer and below the APP layer. A packet header of the TFP layer includes a group identifier of a service flow group to which a service sub-flow belongs and transmission time sequence information of a service packet in the service sub-flow, where the transmission time sequence information may be, for example, a timestamp or a synchronization sequence number. For a service packet that requires a reliable transmission service, the TFP layer requires a receiver to return a response acknowledgment to a sender, to notify the sender of transmission time sequence information of the received service packet. In addition, for related descriptions of other protocol layers of the user plane protocol stack of the 5G network shown in FIG. 8, refer to the user plane protocol stack of the 5G network shown in FIG. 1. Details are not described herein again. It can be noted that the name of the TFP layer is merely an example, and another name may also be used. This is not specifically limited in this embodiment of this application.

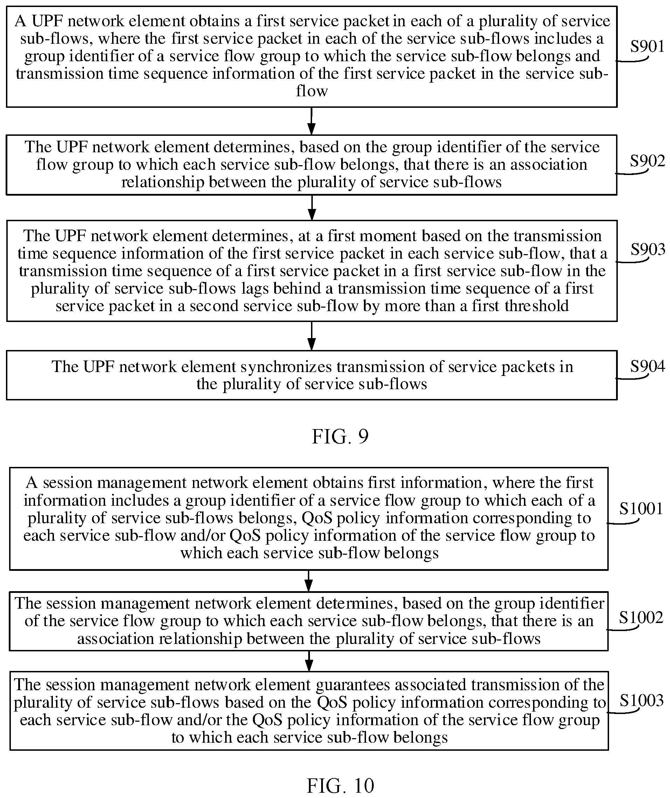

For example, the multi-flow associated transmission method is applied to the UPF network element in the 5G network shown in FIG. 3, and a group identifier of a service flow group to which a service sub-flow belongs and transmission time sequence information of a service packet in the service sub-flow are included in a packet header of a TFP layer. FIG. 9 shows a multi-flow associated transmission method according to an embodiment of this application. The method includes the following steps.

S901: The UPF network element obtains a first service packet in each of a plurality of service sub-flows. The first service packet in each of the service sub-flows includes a group identifier of a service flow group to which the service sub-flow belongs and transmission time sequence information of the first service packet in the service sub-flow.

The transmission time sequence information in this embodiment of this application includes a timestamp or a synchronization sequence number.

In this embodiment of this application, the first service packet in each of the plurality of service sub-flows obtained by the UPF network element may be an uplink packet from a terminal device, or may be a downlink packet from an AF network element. This is not specifically limited in this embodiment of this application.

Optionally, that the first service packet is a downlink packet is used as an example. In this embodiment of this application, the first service packet in each of the plurality of service sub-flows obtained by the UPF network element may be a service packet sent by the AF network element to the UPF network element, or may be a service acknowledgment packet fed back by the terminal device to the UPF network element after the terminal device receives a downlink service packet. This is not specifically limited in this embodiment of this application.

S902: The UPF network element determines, based on the group identifier of the service flow group to which each service sub-flow belongs, that there is an association relationship between the plurality of service sub-flows.

In this embodiment of this application, service flow groups to which the plurality of service sub-flows between which there is association relationship belong have a same group identifier.

S903: The UPF network element determines, at a first moment based on the transmission time sequence information of the first service packet in each service sub-flow, that a transmission time sequence of a first service packet in a first service sub-flow in the plurality of service sub-flows lags behind a transmission time sequence of a first service packet in a second service sub-flow by more than a first threshold.

The first service packet in each service sub-flow is a service packet with a largest transmission time sequence in service packets in the service sub-flow at the first moment, the first service sub-flow is a service sub-flow whose first service packet has a smallest transmission time sequence in the plurality of service sub-flows, and the second service sub-flow is a service sub-flow whose first service packet has a largest transmission time sequence in the plurality of service sub-flows.

It can be noted that the first service sub-flow in this embodiment of this application may also be understood as a service sub-flow in which a service packet is sent the slowest in a time period (for example, a time period t2-t1, where t1 represents the first moment) before the first moment. The second service sub-flow in this embodiment of this application may also be understood as a service sub-flow in which a service packet is sent the fastest in a time period before the first moment. This is uniformly described herein, and details are not described below.

It can be noted that, in this embodiment of this application, the service packet in each service sub-flow at the first moment is a service packet in each service sub-flow that is currently not processed by the UPF network element at the first moment, and does not include a service packet in each service sub-flow that has been processed by the UPF network element before the first moment. This is uniformly described herein, and details are not described below again.

Optionally, the first threshold in this embodiment of this application may be configured based on a service attribute. For example, a maximum difference by which the transmission time sequence of the first service packet in the first service sub-flow in the plurality of service sub-flows lags behind the transmission time sequence of the first service packet in the second service sub-flow is X packets or X milliseconds, or a variance of a value by which the transmission time sequence of the first service packet in the first service sub-flow in the plurality of service sub-flows lags behind the transmission time sequence of the first service packet in the second service sub-flow is not greater than X. This is not specifically limited in this embodiment of this application.

S904: The UPF network element synchronizes transmission of service packets in the plurality of service sub-flows.

The following provides examples of specific implementations in which the UPF network element synchronizes transmission of service packets in the plurality of service sub-flows.

In a possible implementation, after determining that current user plane forwarding resources are sufficient, the UPF network element updates a forwarding priority of the first service sub-flow from a first priority to a second priority, where the second priority is higher than the first priority. In other words, in this implementation, when the current user plane forwarding resources are sufficient, the UPF network element may increase a forwarding priority of a service sub-flow whose transmission time sequence of a first service packet in the service sub-flow is the smallest in the plurality of current service sub-flows, for example, the forwarding priority may be set to a highest forwarding priority supported by the UPF network element.

In another possible implementation, the UPF network element may adjust a forwarding speed of a service packet in the second service sub-flow from a first value to a second value, where the second value is less than the first value, and the second value may be, for example, 0. That is, in this implementation, a service packet in a service sub-flow whose transmission time sequence of the first service packet in the service sub-flow is relatively large in the plurality of service sub-flows may be forwarded in a manner such as buffering. Further, in this implementation, after the plurality of service packets having an association relationship are synchronized as much as possible, the forwarding speed of a service packet in the second service sub-flow may be adjusted from the second value to a third value, where the third value is greater than the second value. For example, the third value may be equal to the first value. A method for determining, by the UPF network element, to adjust the forwarding speed of a service packet in the second service sub-flow from the second value to the third value includes: The UPF network element obtains a second service packet in each of the plurality of service sub-flows, where the second service packet in each service sub-flow includes transmission time sequence information of the second service packet in the service sub-flow; and the UPF network element adjusts the forwarding speed of a service packet in the second service sub-flow from the second value to the third value after determining, at a second moment based on the transmission time sequence information of the second service packet in each service sub-flow, that a transmission time sequence of a second service packet in a third service sub-flow in the plurality of service sub-flows lags behind a transmission time sequence of a second service packet in the second service sub-flow by not more than a second threshold. The second service packet in each service sub-flow is a service packet with a largest transmission time sequence in service packets in each service sub-flow at the second moment, and the third service sub-flow is a service sub-flow whose second service packet has a smallest transmission time sequence in the plurality of service sub-flows. In other words, the UPF network element determines that the forwarding speed of a service packet in the second service sub-flow may be adjusted from the second value to the third value when the transmission time sequence of the second service packet in the third service sub-flow in the plurality of service sub-flows lags behind the transmission time sequence of the second service packet in the second service sub-flow by not more than the second threshold at the second moment. Optionally, the second threshold in this embodiment of this application may be configured based on a service attribute. For example, a maximum difference by which the transmission time sequence of the second service packet in the third service sub-flow in the plurality of service sub-flows lags behind the transmission time sequence of the second service packet in the second service sub-flow is Y packets or Y milliseconds, or a variance of a value by which the transmission time sequence of the second service packet in the third service sub-flow in the plurality of service sub-flows lags behind the transmission time sequence of the second service packet in the second service sub-flow is not greater than Y. This is not specifically limited in this embodiment of this application. It can be noted that, in this embodiment of this application, the service packet in each service sub-flow at the second moment is a service packet in each service sub-flow that is currently not processed by the UPF network element at the second moment, and does not include a service packet in each service sub-flow that has been processed by the UPF network element before the second moment. This is uniformly described herein, and details are not described below again.

In still another possible implementation, after determining that a forwarding capability of a first forwarding path that carries the first service sub-flow is limited, the UPF network element sends indication information to the SMF network element, where the indication information indicates the SMF network element to initiate a user plane reconfiguration process to switch the first service sub-flow from the first forwarding path to a second forwarding path. A forwarding capability of the second forwarding path is higher than the forwarding capability of the first forwarding path.

For example, in this embodiment of this application, that the UPF network element determines that a forwarding capability of a first forwarding path that carries the first service sub-flow is limited includes: The UPF network element determines that load on the first forwarding path that carries the first service sub-flow is greater than a third threshold. In other words, the load on the first forwarding path that carries the first service sub-flow is relatively heavy. In this case, the UPF network element may indicate the SMF network element to initiate a user plane reconfiguration process, to switch the first service sub-flow from the first forwarding path to the second forwarding path with relatively light load. In other words, that the forwarding capability of the second forwarding path is higher than the forwarding capability of the first forwarding path may be understood as that the load on the second forwarding path is lighter than the load on the first forwarding path.

For example, in this embodiment of this application, that the UPF network element determines that a forwarding capability of a first forwarding path that carries the first service sub-flow is limited includes: The UPF network element determines that a latency of the first forwarding path that carries the first service sub-flow is greater than a fourth threshold. In other words, the latency of the first forwarding path that carries the first service sub-flow is relatively large. In this case, the UPF network element may indicate the SMF network element to initiate a user plane reconfiguration process, to switch the first service sub-flow from the first forwarding path to the second forwarding path with a relatively small latency. In other words, that the forwarding capability of the second forwarding path is higher than the forwarding capability of the first forwarding path may be understood as that the latency of the second forwarding path is less than the latency of the first forwarding path.

For example, in this embodiment of this application, that the UPF network element determines that a forwarding capability of a first forwarding path that carries the first service sub-flow is limited includes: The UPF network element determines that a transmission rate of the first forwarding path that carries the first service sub-flow is less than a fifth threshold. In other words, a rate of the first forwarding path that carries the first service sub-flow is relatively low. In this case, the UPF network element may indicate the SMF network element to initiate a user plane reconfiguration process to switch the first service sub-flow from the first forwarding path to the second forwarding path with a relatively high rate. In other words, that the forwarding capability of the second forwarding path is higher than the forwarding capability of the first forwarding path may be understood as that the transmission rate of the second forwarding path is higher than the transmission rate on the first forwarding path.

According to the multi-flow associated transmission method provided in this embodiment of this application, after determining, at the first moment, that the transmission time sequence of the first service packet in the first service sub-flow in the plurality of service sub-flows lags behind the transmission time sequence of the first service packet in the second service sub-flow by more than the first threshold, the UPF network element may take a corresponding scheduling measure to ensure that the service packets in all the associated service sub-flows are transmitted synchronously as much as possible. Therefore, a packet loss due to a buffer overflow can be avoided, and a latency can be reduced, ensuring optimal user experience and network efficiency.

The actions of the UPF network element in the foregoing steps S901 to S904 may be performed by the processor 401 in the communication device 400 shown in FIG. 4 by invoking the application program code stored in the memory 403 to indicate the UPF network element to perform the actions. This is not limited in this embodiment.

It can be noted that in the multi-flow associated transmission method shown in FIG. 9, an example in which the multi-flow associated transmission method is applied to the UPF network element in the 5G network shown in FIG. 3, and a group identifier of a service flow group to which a service sub-flow belongs and transmission time sequence information of a service packet in the service sub-flow are included in a packet header of a TFP layer is used for description. Similarly, when the group identifier of the service flow group to which the service sub-flow belongs and the transmission time sequence information of the service packet in the service sub-flow are included in a newly added service packet header of a TFP layer, the foregoing multi-flow associated transmission method may also be applied to the terminal device in the 5G network shown in FIG. 3. In other words, the foregoing multi-flow associated transmission method may be implemented at the TFP layer between the terminal device and the UPF network element. Related implementation is similar to the embodiment shown in FIG. 9, and details are not described herein again.

It can be noted that, in the foregoing embodiment, that the group identifier of the service flow group to which the service sub-flow belongs and the transmission time sequence information of the service packet in the service sub-flow are included in the newly added service packet header of the TFP layer is merely an example of implementation. Alternatively, enhancement may be directly performed based on the user plane protocol stack of the 5G network shown in FIG. 1, for example, a GTP-U layer is extended, and the group identifier of the service flow group to which the service sub-flow belongs and the transmission time sequence information of the service packet in the service sub-flow are added to a service packet header of the GTP-U layer. In this case, the multi-flow associated transmission method may be implemented at the GTP-U layer between the RAN device and the UPF. Alternatively, for example, a PDCP layer is extended, and the group identifier of the service flow group to which the service sub-flow belongs and the transmission time sequence information of the service packet in the service sub-flow are added to a service packet header of the PDCP layer. In this case, the multi-flow associated transmission method may be implemented at the PDCP layer between the terminal device and the RAN device. Related implementation is similar to the embodiment shown in FIG. 9, and details are not described herein again.

It can be noted that the embodiment of synchronizing transmission of service packets in the plurality of service sub-flows may also be applied to a service packet transmission process after the multi-flow associated transmission method provided in the embodiment shown in FIG. 5 or FIG. 6. This is not specifically limited in this embodiment of this application.

FIG. 10 shows a multi-flow associated transmission method according to an embodiment of this application. The method includes the following steps.

S1001: A session management network element obtains first information, where the first information includes a group identifier of a service flow group to which each of a plurality of service sub-flows belongs, QoS policy information corresponding to each service sub-flow and/or QoS policy information of the service flow group to which each service sub-flow belongs.

For example, the session management network element in this embodiment of this application may be, for example, the SMF network element in the embodiment shown in FIG. 5 or FIG. 6.

Optionally, in this embodiment of this application, that the session management network element obtains first information includes: The session management network element receives the first information from a policy control network element. For example, the policy control network element in this embodiment of this application may be, for example, the PCF network element in the embodiment shown in FIG. 5 or FIG. 6.

For example, for a specific implementation of step S1001, refer to step 504 in the embodiment shown in FIG. 5 or step S602 and steps S604 to S606 in the embodiment shown in FIG. 6. Details are not described herein again.

S1002: The session management network element determines, based on the group identifier of the service flow group to which each service sub-flow belongs, that there is an association relationship between the plurality of service sub-flows.

For example, for a specific implementation of step S1002, refer to step 505 in the embodiment shown in FIG. 5 or step S607 in the embodiment shown in FIG. 6. Details are not described herein again.

S1003: The session management network element guarantees associated transmission of the plurality of service sub-flows based on the QoS policy information corresponding to each service sub-flow and/or the QoS policy information of the service flow group to which each service sub-flow belongs.

For example, for a specific implementation of step S1003, refer to steps S506a to S510a or steps S506b to S510b in the embodiment shown in FIG. 5. Alternatively, for a specific implementation of step S1003, refer to steps S608a to S612a or steps 608b to S612b in the embodiment shown in FIG. 6. Details are not described herein again.

Optionally, the multi-flow associated transmission method provided in this embodiment of this application may further include: The session management network element allocates a same path identifier for the plurality of service sub-flows, where the path identifier identifies an IP transport layer transmission path between a user plane network element and an access network device; and the session management network element sends the path identifier to the user plane network element, and the session management network element sends the path identifier to the access network device. For a specific implementation of the multi-flow associated transmission method applied to the 5G network shown in FIG. 3, refer to the embodiment shown in FIG. 5 or FIG. 6. Details are not described herein again.

Based on the multi-flow associated transmission method provided in this embodiment of this application, the session management network element may obtain the group identifier of the service flow group to which each of the plurality of service sub-flows belongs, and the QoS policy information corresponding to each service sub-flow and/or the QoS policy information of the service flow group to which each service sub-flow belongs; and after determining, based on the group identifier of the service flow group to which each service sub-flow belongs, that there is an association relationship between the plurality of service sub-flows, guarantee associated transmission of the plurality of service sub-flows based on the QoS policy information corresponding to each service sub-flow and/or the QoS policy information of the service flow group to which each service sub-flow belongs, including bearer combination, selecting a same user plane network element and a same access network device, and the like. Therefore, a problem of a packet loss due to a buffer overflow caused when a plurality of service sub-flows between which there is association relationship may be carried on different connections can be avoided, and the user plane network element or the access network device can forward, over a same forwarding path, service packets in the plurality of service sub-flows between which there is association relationship. For example, the user plane network element or the access network device may forward, via a same interface board, a same port, or the like, the service packets in the plurality of service sub-flows between which there is association relationship. In conclusion, based on the multi-flow associated transmission method provided in embodiments of this application, it can be ensured that a plurality of service sub-flows between which there is association relationship can reach a destination end as synchronously as possible when being forwarded via a mobile network, so that a packet loss caused by a buffer overflow can be avoided, a latency can be reduced, and optimal user experience and network efficiency can be ensured.

The actions of the communication apparatus in steps S1001 to S1003 may be performed by the processor 401 in the communication device 400 shown in FIG. 4 by invoking the application program code stored in the memory 403 to indicate the communication apparatus to perform the actions. This is not limited in this embodiment.

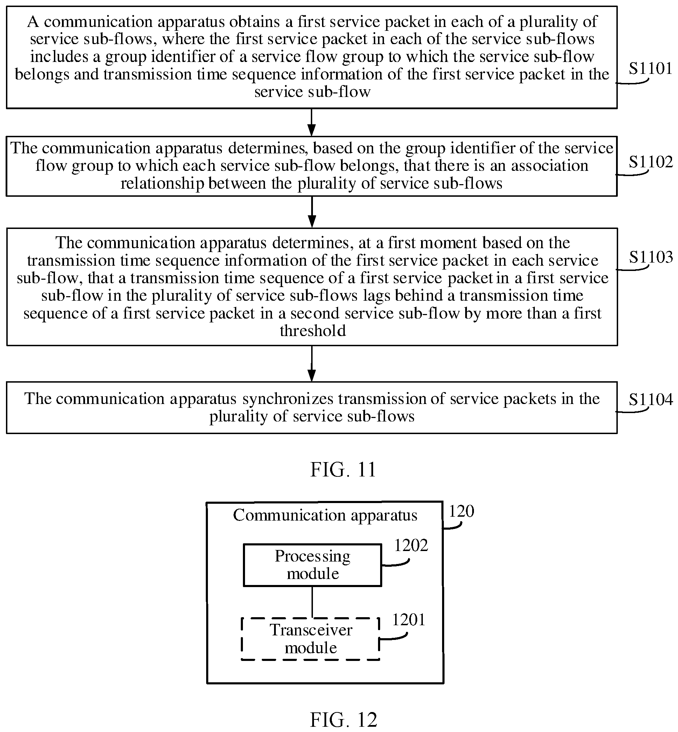

FIG. 11 shows a multi-flow associated transmission method according to an embodiment of this application. The method includes the following steps.

S1101: A communication apparatus obtains a first service packet in each of a plurality of service sub-flows, where the first service packet in each of the service sub-flows includes a group identifier of a service flow group to which the service sub-flow belongs and transmission time sequence information of the first service packet in the service sub-flow.

Optionally, the transmission time sequence information in this embodiment of this application includes a timestamp or a synchronization sequence number.

Optionally, the communication apparatus in this embodiment of this application may be a user plane network element, an access network device, or a terminal device. This is not specifically limited in this embodiment of this application.

When the communication apparatus is the user plane network element or the access network device, the first service packet in each of the plurality of service sub-flows that is obtained by the communication apparatus may be an uplink packet from a terminal device, or may be a downlink packet from an application function network element. This is not specifically limited in this embodiment of this application. Optionally, that the first service packet is a downlink packet is used as an example. In this embodiment of this application, the first service packet in each of the plurality of service sub-flows that is obtained by the communication apparatus may be a service packet sent by the application function network element to the terminal device, or may be a service acknowledgment packet fed back by the terminal device to the application function network element after the terminal device receives a downlink service packet. This is not specifically limited in this embodiment of this application.

When the communication apparatus is a terminal device, the first service packet in each of the plurality of service sub-flows that is obtained by the communication apparatus may be a service packet from an APP layer of the terminal device, or may be a downlink packet from an application function network element. This is not specifically limited in this embodiment of this application. Optionally, that the first service packet is an uplink packet is used as an example. In this embodiment of this application, the first service packet in each of the plurality of service sub-flows that is obtained by the communication apparatus may be a service packet from an APP layer of the terminal device, or may be a service acknowledgment packet fed back by the application function network element to the terminal device after the application function network element receives an uplink service packet. This is not specifically limited in this embodiment of this application.

S1102: The communication apparatus determines, based on the group identifier of the service flow group to which each service sub-flow belongs, that there is an association relationship between the plurality of service sub-flows.

S1103: The communication apparatus determines, at a first moment based on the transmission time sequence information of the first service packet in each service sub-flow, that a transmission time sequence of a first service packet in a first service sub-flow in the plurality of service sub-flows lags behind a transmission time sequence of a first service packet in a second service sub-flow by more than a first threshold.

The first service packet in each service sub-flow is a service packet with a largest transmission time sequence in service packets in the service sub-flow at the first moment, the first service sub-flow is a service sub-flow whose first service packet has a smallest transmission time sequence in the plurality of service sub-flows, and the second service sub-flow is a service sub-flow whose first service packet has a largest transmission time sequence in the plurality of service sub-flows.

It can be noted that, in this embodiment of this application, the service packet in each service sub-flow at the first moment is a service packet in each service sub-flow that is currently not processed by the communication apparatus at the first moment, and does not include a service packet in each service sub-flow that has been processed by the communication apparatus before the first moment. This is uniformly described herein, and details are not described below again.

S1104: The communication apparatus synchronizes transmission of service packets in the plurality of service sub-flows.

For example, the communication apparatus is the UPF network element in the embodiment shown in FIG. 9. For a specific implementation of the embodiment shown in FIG. 11, refer to the embodiment shown in FIG. 9. Details are not described herein again.

According to the multi-flow associated transmission method provided in this embodiment of this application, after determining, at the first moment, that the transmission time sequence of the first service packet in the first service sub-flow in the plurality of service sub-flows lags behind the transmission time sequence of the first service packet in the second service sub-flow by more than the first threshold, the communication apparatus may take a corresponding scheduling measure to ensure that the service packets in all the associated service sub-flows are transmitted synchronously as much as possible. Therefore, a packet loss due to a buffer overflow at the receiving end can be avoided, and a latency can be reduced, ensuring optimal user experience and network efficiency.

The actions of the communication apparatus in the foregoing steps S1101 to S1104 may be performed by the processor 401 in the communication device 400 shown in FIG. 4 by invoking the application program code stored in the memory 403 to indicate the UPF network element to perform the actions. This is not limited in this embodiment.

It may be understood that, in the embodiments shown in FIG. 5, FIG. 6, and FIG. 9 to FIG. 11, the method and/or the step implemented by the session management network element (the SMF network element in the embodiment shown in FIG. 5 or FIG. 6, or the session management network element in the embodiment shown in FIG. 10) may also be implemented by a component that can be used by the session management network element; the method and/or the step implemented by the communication apparatus (the UPF network element in the embodiment shown in FIG. 9 or the communication apparatus in the embodiment shown in FIG. 11) may also be implemented by a component (for example, a chip or a circuit) that can be used by the communication apparatus.

The foregoing mainly describes the solutions provided in embodiments of this application from a perspective of interaction between network elements. Correspondingly, embodiments of this application further provide a communication apparatus. The communication apparatus may be the communication apparatus in the foregoing method embodiments. Alternatively, the communication apparatus may be the session management network element in the foregoing method embodiments, or an apparatus including the session management network element, or a component that can be used by the session management network element. It may be understood that, to implement the foregoing functions, the communication apparatus includes a hardware structure and/or a software module for performing corresponding functions. A person skilled in the art can easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 12 is a schematic diagram of a structure of a communication apparatus 120. The communication apparatus 120 includes a processing module 1202. Optionally, the communication apparatus further includes a transceiver module 1201. The transceiver module 1201 may also be referred to as a transceiver unit, and is configured to implement a transceiver function. For example, the transceiver module 1201 may be a transceiver circuit, a transceiver, a transceiver device, or a communication interface.

For example, the communication apparatus 120 is the session management network element in the foregoing method embodiment, or a chip or another component disposed in the session management network element.

The processing module 1202 is configured to obtain first information, where the first information includes a group identifier of a service flow group to which each of the plurality of service sub-flows belongs, and QoS policy information corresponding to each service sub-flow and/or QoS policy information of the service flow group to which each service sub-flow belongs. The processing module 1202 is further configured to determine, based on the group identifier of the service flow group to which each service sub-flow belongs, that there is an association relationship between the plurality of service sub-flows. The processing module 1202 is further configured to guarantee associated transmission of the plurality of service sub-flows based on the QoS policy information corresponding to each service sub-flow and/or the QoS policy information of the service flow group to which each service sub-flow belongs.

Optionally, that the processing module 1202 is configured to guarantee associated transmission of the plurality of service sub-flows based on the QoS policy information corresponding to each service sub-flow and/or the QoS policy information of the service flow group to which each service sub-flow belongs includes: after determining that current user plane forwarding resources are sufficient, determining, based on the QoS policy information corresponding to each service sub-flow and/or the QoS policy information of the service flow group to which each service sub-flow belongs, to combine service packets in the plurality of service sub-flows into a first bearer for transmission; and sending a QoS requirement of the first bearer to a user plane network element by using the transceiver module 1201, and sending the QoS requirement of the first bearer to an access network device by using the transceiver module 1201, where the QoS requirement of the first bearer is used for allocating a user plane resource of the first bearer.

Optionally, the first information includes the QoS policy information corresponding to each service sub-flow. The processing module 1202 is further configured to send, to the user plane network element by using the transceiver module 1201, the QoS policy information corresponding to each service sub-flow, where the QoS policy information corresponding to each service sub-flow is used to allocate a user plane resource corresponding to each service sub-flow on the first bearer.

Optionally, the QoS requirement of the first bearer includes at least one of the following: a bandwidth of the first bearer, a latency of the first bearer, a jitter of the first bearer, or a packet loss rate of the first bearer. The bandwidth of the first bearer is a sum of bandwidths in the QoS policy information of all the service sub-flows in the plurality of service sub-flows, or the bandwidth of the first bearer is a bandwidth in the QoS policy information of the service flow group to which each service sub-flow belongs. The latency of the first bearer is a smallest value of latencies in the QoS policy information of all the service sub-flows in the plurality of service sub-flows, or the latency of the first bearer is a latency in the QoS policy information of the service flow group to which each service sub-flow belongs. The jitter of the first bearer is a smallest value of jitters in the QoS policy information of all the service sub-flows in the plurality of service sub-flows, or the jitter of the first bearer is a jitter in the QoS policy information of the service flow group to which each service sub-flow belongs. The packet loss rate of the first bearer is a smallest value of packet loss rates in the QoS policy information of all the service sub-flows in the plurality of service sub-flows, or the packet loss rate of the first bearer is a packet loss rate in the QoS policy information of the service flow group to which each service sub-flow belongs.

Optionally, that the processing module 1202 is configured to guarantee associated transmission of the plurality of service sub-flows based on the QoS policy information corresponding to each service sub-flow and/or the QoS policy information of the service flow group to which each service sub-flow belongs includes: selecting a same user plane network element and a same access network device for the plurality of service sub-flows; determining, based on the QoS policy information corresponding to each service sub-flow and/or the QoS policy information of the service flow group to which each service sub-flow belongs, to combine service packets in the plurality of service sub-flows into m bearers for transmission, where m is a positive integer greater than 1; and sending QoS requirements of the m bearers to the user plane network element by using the transceiver module 1201, and sending the QoS requirements of the m bearers to the access network device by using the transceiver module 1201, where the QoS requirements of the m bearers are used for allocating user plane resources of the m bearers.

Optionally, the first information includes the QoS policy information corresponding to each service sub-flow. The processing module 1202 is further configured to send the QoS policy information corresponding to each service sub-flow to the user plane network element by using the transceiver module 1201, where the QoS policy information corresponding to each service sub-flow is used for allocating a user plane resource corresponding to each service sub-flow on the m bearers.

Optionally, the first information includes the QoS policy information corresponding to each service sub-flow. The m bearers include a second bearer, the second bearer is any one of the m bearers that is for transmitting a service packet in n service sub-flows of the plurality of service sub-flows, and n is a positive integer greater than 1. A QoS requirement of the second bearer includes at least one of the following: a bandwidth of the second bearer, a latency of the second bearer, a jitter of the second bearer, or a packet loss rate of the second bearer. The bandwidth of the second bearer is a sum of bandwidths in QoS policy information of all the n service sub-flows. The latency of the second bearer is a smallest value of latencies in the QoS policy information of all the n service sub-flows, or the latency of the second bearer is a latency in the QoS policy information of the service flow group to which each service sub-flow belongs. The jitter of the second bearer is a smallest value of jitters in the QoS policy information of all the n service sub-flows, or the jitter of the second bearer is a jitter in the QoS policy information of the service flow group to which each service sub-flow belongs. The packet loss rate of the second bearer is a smallest value of packet loss rates in the QoS policy information of all the n service sub-flows, or the packet loss rate of the second bearer is a packet loss rate in the QoS policy information of the service flow group to which each service sub-flow belongs.

Optionally, the first information includes the QoS policy information corresponding to each service sub-flow. The m bearers include a third bearer, where the third bearer is any one of the m bearers that is for transmitting a service packet in one service sub-flow of the plurality of service sub-flows. A QoS requirement of the third bearer includes at least one of the following: a bandwidth of the third bearer, a latency of the third bearer, a jitter of the third bearer, or a packet loss rate of the third bearer. The bandwidth of the third bearer is a bandwidth in QoS policy information of one of the plurality of service sub-flows. The latency of the third bearer is a latency in the QoS policy information of one of the plurality of service sub-flows, or the latency of the third bearer is a latency in the QoS policy information of the service flow group to which each service sub-flow belongs. The jitter of the third bearer is a jitter in the QoS policy information of one of the plurality of service sub-flows, or the jitter of the third bearer is a jitter in the QoS policy information of the service flow group to which each service sub-flow belongs. The packet loss rate of the third bearer is a packet loss rate in the QoS policy information of one of the plurality of service sub-flows, or the packet loss rate of the third bearer is a packet loss rate in the QoS policy information of the service flow group to which each service sub-flow belongs.

Optionally, the processing module 1202 is further configured to allocate a same path identifier to the plurality of service sub-flows, where the path identifier identifies an IP transport layer transmission path between the user plane network element and the access network device. The transceiver module 1201 is configured to send the path identifier to the user plane network element, and send the path identifier to the access network device.

Optionally, that the processing module 1202 is configured to obtain first information includes: receiving the first information from a policy control network element by using the transceiver module 1201.

Optionally, the transceiver module 1201 is further configured to: before receiving the first information from the policy control network element, receive, from the user plane network element, the group identifier of the service flow group to which each of the plurality of service sub-flows belongs and the flow description information of each service sub-flow. The transceiver module 1201 is further configured to send a request message to the policy control network element, where the request message includes the group identifier of the service flow group to which each of the plurality of service sub-flows belongs and the flow description information of each service sub-flow, and is for requesting to obtain the quality of service QoS policy information corresponding to each service sub-flow and/or QoS policy information of the service flow group to which each service sub-flow belongs.

Alternatively, for example, the communication apparatus 120 is the communication apparatus in the foregoing method embodiment, or a chip or another component disposed in the communication apparatus.

The processing module 1202 is configured to obtain a first service packet in each of the plurality of service sub-flows, where the first service packet in each service sub-flow includes a group identifier of a service flow group to which the service sub-flow belongs and transmission time sequence information of the first service packet in the service sub-flow. The processing module 1202 is further configured to determine, based on the group identifier of the service flow group to which each service sub-flow belongs, that there is an association relationship between the plurality of service sub-flows. The processing module 1202 is further configured to synchronize transmission of service packets in the plurality of service sub-flows after determining, at a first moment based on the transmission time sequence information of the first service packet in each service sub-flow, that a transmission time sequence of a first service packet in a first service sub-flow in the plurality of service sub-flows lags behind a transmission time sequence of a first service packet in a second service sub-flow by more than a first threshold, where the first service packet in each service sub-flow is a service packet with a largest transmission time sequence in service packets in the service sub-flow at the first moment, the first service sub-flow is a service sub-flow whose first service packet has a smallest transmission time sequence in the plurality of service sub-flows, and the second service sub-flow is a service sub-flow whose first service packet has a largest transmission time sequence in the plurality of service sub-flows.

Optionally, the transmission time sequence information in this embodiment of this application includes a timestamp or a synchronization sequence number.

Optionally, that the processing module 1202 is configured to synchronize transmission of service packets in the plurality of service sub-flows includes: determining that current user plane forwarding resources are sufficient; and updating a forwarding priority of the first service sub-flow from a first priority to a second priority, where the second priority is higher than the first priority.

Optionally, that the processing module 1202 is configured to synchronize transmission of service packets in the plurality of service sub-flows includes: adjusting a forwarding speed of a service packet in the second service sub-flow from a first value to a second value, where the second value is less than the first value.

Optionally, the processing module 1202 is further configured to obtain a second service packet in each of the plurality of service sub-flows, where the second service packet in each service sub-flow includes transmission time sequence information of the second service packet in each service sub-flow. The processing module 1202 is further configured to determine, at a second moment based on the transmission time sequence information of the second service packet in each service sub-flow, that a transmission time sequence of a second service packet in a third service sub-flow in the plurality of service sub-flows lags behind a transmission time sequence of a second service packet in the second service sub-flow by not more than a second threshold, where the second service packet in each service sub-flow is a service packet with a largest transmission time sequence in service packets in each service sub-flow at the second moment, and the third service sub-flow is a service sub-flow whose second service packet has a smallest transmission time sequence in the plurality of service sub-flows. The processing module 1202 is further configured to adjust the forwarding speed of a service packet in the second service sub-flow from the second value to a third value, where the third value is greater than the second value.

Optionally, that the processing module 1202 is configured to synchronize transmission of service packets in the plurality of service sub-flows includes: determining that a forwarding capability of a first forwarding path that carries the first service sub-flow is limited; and sending indication information to a session management network element by using the transceiver module 1201, where the indication information indicates the session management network element to initiate a user plane reconfiguration process to switch the first service sub-flow from the first forwarding path to a second forwarding path, and a forwarding capability of the second forwarding path is higher than the forwarding capability of the first forwarding path.

Optionally, that the processing module 1202 is configured to determine that a forwarding capability of a first forwarding path that carries the first service sub-flow is limited includes: determining that load of the first forwarding path that carries the first service sub-flow is greater than a third threshold; or determining that a latency of the first forwarding path that carries the first service sub-flow is greater than a fourth threshold; or determining that a transmission rate of the first forwarding path that carries the first service sub-flow is less than a fifth threshold.

All related content of the steps in the foregoing method embodiments may be cited in function descriptions of the corresponding functional modules. Details are not described herein again.

In this embodiment, the communication apparatus 120 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may conceive that the communication apparatus 120 may be in a form of the communication device 400 shown in FIG. 4.

For example, the processor 401 in the communication device 400 shown in FIG. 4 may invoke the computer-executable instruction stored in the memory 403, so that the communication device 400 performs the multi-flow associated transmission method in the foregoing method embodiments.

Specifically, functions/implementation processes of the transceiver module 1201 and the processing module 1202 in FIG. 12 may be implemented by the processor 401 in the communication device 400 shown in FIG. 4 by invoking the computer-executable instructions stored in the memory 403. Alternatively, a function/an implementation process of the processing module 1202 in FIG. 12 may be implemented by the processor 401 in the communication device 400 shown in FIG. 4 by invoking the computer-executable instructions stored in the memory 403. A function/an implementation process of the transceiver module 1201 in FIG. 12 may be implemented by using the communication interface 404 in the communication device 400 shown in FIG. 4.

Because the communication apparatus 120 provided in this embodiment may perform the foregoing multi-flow associated transmission method, for technical effects that can be achieved by the communication apparatus 120, refer to the foregoing method embodiment. Details are not described herein again.

It can be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system-on-a-chip) or an ASIC, or may be an independent semiconductor chip. In addition to a core for executing software instructions to perform operations or processing, the processor may further include a necessary hardware accelerator, for example, a field programmable gate array (field programmable gate array, FPGA), a PLD (programmable logic device), or a logic circuit that implements a special-purpose logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible implementation, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete component. This is not specifically limited in this embodiment of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A multi-flow associated transmission method, wherein the method comprises:
obtaining a first service packet in each of a plurality of service sub-flows, wherein the first service packet in each of the service sub-flows comprises a group identifier of a service flow group to which the service sub-flow belongs and transmission time sequence information of the first service packet in the service sub-flow;
determining, based on the group identifier of the service flow group to which each service sub-flow belongs, that there is an association relationship between the plurality of service sub-flows;
determining, at a first moment based on the transmission time sequence information of the first service packet in each service sub-flow, that a transmission time sequence of a first service packet in a first service sub-flow in the plurality of service sub-flows lags behind a transmission time sequence of a first service packet in a second service sub-flow by more than a first threshold, wherein the first service packet in each service sub-flow is a service packet with a largest transmission time sequence in service packets in the service sub-flow at the first moment, the first service sub-flow is a service sub-flow whose first service packet has a smallest transmission time sequence in the plurality of service sub-flows, and the second service sub-flow is a service sub-flow whose first service packet has a largest transmission time sequence in the plurality of service sub-flows; and
synchronizing transmission of service packets in the plurality of service sub-flows.

2. The method according to claim 1, wherein the synchronizing transmission of service packets in the plurality of service sub-flows comprises:
determining that current user plane forwarding resources are sufficient; and
updating a forwarding priority of the first service sub-flow from a first priority to a second priority, wherein the second priority is higher than the first priority.

3. The method according to claim 1, wherein the synchronizing transmission of service packets in the plurality of service sub-flows comprises:
adjusting a forwarding speed of a service packet in the second service sub-flow from a first value to a second value, wherein the second value is less than the first value.

4. The method according to claim 3, wherein the method further comprises:
obtaining a second service packet in each of the plurality of service sub-flows, wherein the second service packet in each of the service sub-flows comprises transmission time sequence information of the second service packet in the service sub-flow;
determining, at a second moment based on the transmission time sequence information of the second service packet in each service sub-flow, that a transmission time sequence of a second service packet in a third service sub-flow in the plurality of service sub-flows lags behind a transmission time sequence of a second service packet in the second service sub-flow by not more than a second threshold, wherein the second service packet in each service sub-flow is a service packet with a largest transmission time sequence in service packets in each service sub-flow at the second moment, and the third service sub-flow is a service sub-flow whose second service packet has a smallest transmission time sequence in the plurality of service sub-flows; and
adjusting the forwarding speed of a service packet in the second service sub-flow from the second value to a third value, wherein the third value is greater than the second value.

5. The method according to claim 1, wherein the synchronizing transmission of service packets in the plurality of service sub-flows comprises:
determining that a forwarding capability of a first forwarding path that carries the first service sub-flow is limited; and
sending indication information to a session management network element, wherein the indication information indicates the session management network element to initiate a user plane reconfiguration process to switch the first service sub-flow from the first forwarding path to a second forwarding path, and a forwarding capability of the second forwarding path is higher than the forwarding capability of the first forwarding path.

6. The method according to claim 5, wherein the determining that a forwarding capability of a first forwarding path that carries the first service sub-flow is limited comprises:
determining that load on the first forwarding path that carries the first service sub-flow is greater than a third threshold;
determining that a latency of the first forwarding path that carries the first service sub-flow is greater than a fourth threshold; or
determining that a transmission rate of the first forwarding path that carries the first service sub-flow is less than a fifth threshold.

7. The method according to any one of claims 1 to 6, wherein the transmission time sequence information comprises a timestamp or a synchronization sequence number.

8. A multi-flow associated transmission method, wherein the method comprises:
obtaining, by a session management network element, first information, wherein the first information comprises a group identifier of a service flow group to which each of a plurality of service sub-flows belongs, and quality of service QoS policy information corresponding to each service sub-flow or QoS policy information of the service flow group to which each service sub-flow belongs;
determining, by the session management network element based on the group identifier of the service flow group to which each service sub-flow belongs, that there is an association relationship between the plurality of service sub-flows; and
guaranteeing, by the session management network element, associated transmission of the plurality of service sub-flows based on the QoS policy information corresponding to each service sub-flow or the QoS policy information of the service flow group to which each service sub-flow belongs.

9. The method according to claim 8, wherein the guaranteeing, by the session management network element, associated transmission of the plurality of service sub-flows based on the QoS policy information corresponding to each service sub-flow or the QoS policy information of the service flow group to which each service sub-flow belongs comprises:
determining, by the session management network element, that current user plane forwarding resources are sufficient;
determining, by the session management network element based on the QoS policy information corresponding to each service sub-flow or the QoS policy information of the service flow group to which each service sub-flow belongs, to combine service packets in the plurality of service sub-flows into a first bearer for transmission; and
sending, by the session management network element, a QoS requirement of the first bearer to a user plane network element, and sending, by the session management network element, the QoS requirement of the first bearer to an access network device, wherein the QoS requirement of the first bearer is used for allocating a user plane resource of the first bearer.

10. The method according to claim 9, wherein the first information comprises the QoS policy information corresponding to each service sub-flow, and the method further comprises:
sending, by the session management network element to the user plane network element, the QoS policy information corresponding to each service sub-flow, wherein the QoS policy information corresponding to each service sub-flow is used for allocating a user plane resource corresponding to each service sub-flow on the first bearer.

11. The method according to claim 8, wherein the guaranteeing, by the session management network element, associated transmission of the plurality of service sub-flows based on the QoS policy information corresponding to each service sub-flow or the QoS policy information of the service flow group to which each service sub-flow belongs comprises:
selecting, by the session management network element, a same user plane network element and a same access network device for the plurality of service sub-flows;
determining, by the session management network element based on the QoS policy information corresponding to each service sub-flow or the QoS policy information of the service flow group to which each service sub-flow belongs, to combine service packets in the plurality of service sub-flows into m bearers for transmission, wherein m is a positive integer greater than 1; and
sending, by the session management network element, QoS requirements of the m bearers to the user plane network element, and sending, by the session management network element, the QoS requirements of the m bearers to the access network device, wherein the QoS requirements of the m bearers are used for allocating user plane resources of the m bearers.

12. The method according to claim 11, wherein the first information comprises the QoS policy information corresponding to each service sub-flow, and the method further comprises:
sending, by the session management network element, the QoS policy information corresponding to each service sub-flow to the user plane network element, wherein the QoS policy information corresponding to each service sub-flow is used for allocating a user plane resource corresponding to each service sub-flow on the m bearers.

13. The method according to any one of claims 9 to 12, wherein the method further comprises:
allocating, by the session management network element, a same path identifier to the plurality of service sub-flows, wherein the path identifier identifies an Internet Protocol IP transport layer transmission path between the user plane network element and the access network device; and
sending, by the session management network element, the path identifier to the user plane network element, and sending, by the session management network element, the path identifier to the access network device.

14. The method according to any one of claims 8 to 13, wherein the obtaining, by a session management network element, first information comprises:
receiving, by the session management network element, the first information from a policy control network element.

15. The method according to claim 14, wherein before the receiving, by the session management network element, the first information from a policy control network element, the method further comprises:
receiving, by the session management network element from the user plane network element, the group identifier of the service flow group to which each of the plurality of service sub-flows belongs and flow description information of each service sub-flow; and
sending, by the session management network element, a request message to the policy control network element, wherein the request message comprises the group identifier of the service flow group to which each of the plurality of service sub-flows belongs and the flow description information of each service sub-flow, and is for requesting to obtain the quality of service QoS policy information corresponding to each service sub-flow or the QoS policy information of the service flow group to which each service sub-flow belongs.

16. A communication apparatus, wherein the communication apparatus comprises a processing module;
the processing module is configured to obtain a first service packet in each of a plurality of service sub-flows, wherein the first service packet in each of the service sub-flows comprises a group identifier of a service flow group to which the service sub-flow belongs and transmission time sequence information of the first service packet in the service sub-flow;
the processing module is further configured to determine, based on the group identifier of the service flow group to which each service sub-flow belongs, that there is an association relationship between the plurality of service sub-flows;
the processing module is further configured to determine, at a first moment based on the transmission time sequence information of the first service packet in each service sub-flow, that a transmission time sequence of a first service packet in a first service sub-flow in the plurality of service sub-flows lags behind a transmission time sequence of a first service packet in a second service sub-flow by more than a first threshold, wherein the first service packet in each service sub-flow is a service packet with a largest transmission time sequence in service packets in the service sub-flow at the first moment, the first service sub-flow is a service sub-flow whose first service packet has a smallest transmission time sequence in the plurality of service sub-flows, and the second service sub-flow is a service sub-flow whose first service packet has a largest transmission time sequence in the plurality of service sub-flows; and
the processing module is further configured to synchronize transmission of service packets in the plurality of service sub-flows.

17. The communication apparatus according to claim 16, wherein that the processing module is configured to synchronize transmission of service packets in the plurality of service sub-flows comprises: determining that current user plane forwarding resources are sufficient, and updating a forwarding priority of the first service sub-flow from a first priority to a second priority, wherein the second priority is higher than the first priority.

18. The communication apparatus according to claim 16, wherein that the processing module is configured to synchronize transmission of service packets in the plurality of service sub-flows comprises: adjusting a forwarding speed of a service packet in the second service sub-flow from a first value to a second value, wherein the second value is less than the first value.

19. The communication apparatus according to claim 18, wherein the processing module is further configured to obtain a second service packet in each of the plurality of service sub-flows, wherein the second service packet in each of the service sub-flows comprises transmission time sequence information of the second service packet in the service sub-flow;
the processing module is further configured to determine, at a second moment based on the transmission time sequence information of the second service packet in each service sub-flow, that a transmission time sequence of a second service packet in a third service sub-flow in the plurality of service sub-flows lags behind a transmission time sequence of a second service packet in the second service sub-flow by not more than a second threshold, wherein the second service packet in each service sub-flow is a service packet with a largest transmission time sequence in service packets in each service sub-flow at the second moment, and the third service sub-flow is a service sub-flow whose second service packet has a smallest transmission time sequence in the plurality of service sub-flows; and
the processing module is further configured to adjust the forwarding speed of a service packet in the second service sub-flow from the second value to a third value, wherein the third value is greater than the second value.

20. The communication apparatus according to claim 16, wherein the communication apparatus further comprises a transceiver module; and
that the processing module is configured to synchronize transmission of service packets in the plurality of service sub-flows comprises: determining that a forwarding capability of a first forwarding path that carries the first service sub-flow is limited; and sending indication information to a session management network element by using the transceiver module, wherein the indication information indicates the session management network element to initiate a user plane reconfiguration process to switch the first service sub-flow from the first forwarding path to a second forwarding path, and a forwarding capability of the second forwarding path is higher than the forwarding capability of the first forwarding path.

21. The communication apparatus according to claim 20, wherein that the processing module is configured to determine that a forwarding capability of a first forwarding path that carries the first service sub-flow is limited comprises:
determining that load on the first forwarding path that carries the first service sub-flow is greater than a third threshold;
determining that a latency of the first forwarding path that carries the first service sub-flow is greater than a fourth threshold; or
determining that a transmission rate of the first forwarding path that carries the first service sub-flow is less than a fifth threshold.

22. The communication apparatus according to any one of claims 16 to 21, wherein the transmission time sequence information comprises a timestamp or a synchronization sequence number.

23. A session management network element, wherein the session management network element comprises a processing module and a transceiver module;
the processing module is configured to obtain first information, wherein the first information comprises a group identifier of a service flow group to which each of a plurality of service sub-flows belongs, and quality of service QoS policy information corresponding to each service sub-flow or QoS policy information of the service flow group to which each service sub-flow belongs;
the processing module is further configured to determine, based on the group identifier of the service flow group to which each service sub-flow belongs, that there is an association relationship between the plurality of service sub-flows; and
the processing module is further configured to guarantee associated transmission of the plurality of service sub-flows based on the QoS policy information corresponding to each service sub-flow or the QoS policy information of the service flow group to which each service sub-flow belongs.

24. The session management network element according to claim 23, wherein the session management network element further comprises a transceiver module; and
that the processing module is configured to guarantee associated transmission of the plurality of service sub-flows based on the QoS policy information corresponding to each service sub-flow or the QoS policy information of the service flow group to which each service sub-flow belongs comprises: after determining that current user plane forwarding resources are sufficient, determining, based on the QoS policy information corresponding to each service sub-flow or the QoS policy information of the service flow group to which each service sub-flow belongs, to combine service packets in the plurality of service sub-flows into a first bearer for transmission; and sending a QoS requirement of the first bearer to a user plane network element by using the transceiver module, and sending the QoS requirement of the first bearer to an access network device by using the transceiver module, wherein the QoS requirement of the first bearer is used for allocating a user plane resource of the first bearer.

25. The session management network element according to claim 24, wherein the first information comprises the QoS policy information corresponding to each service sub-flow; and
the processing module is further configured to send, to the user plane network element by using the transceiver module, the QoS policy information corresponding to each service sub-flow, wherein the QoS policy information corresponding to each service sub-flow is used for allocating a user plane resource corresponding to each service sub-flow on the first bearer.

26. The session management network element according to claim 23, wherein the session management network element further comprises a transceiver module; and
that the processing module is configured to guarantee associated transmission of the plurality of service sub-flows based on the QoS policy information corresponding to each service sub-flow or the QoS policy information of the service flow group to which each service sub-flow belongs comprises: selecting a same user plane network element and a same access network device for the plurality of service sub-flows; determining, based on the QoS policy information corresponding to each service sub-flow or the QoS policy information of the service flow group to which each service sub-flow belongs, to combine service packets in the plurality of service sub-flows into m bearers for transmission, wherein m is a positive integer greater than 1; and sending QoS requirements of the m bearers to the user plane network element by using the transceiver module, and sending the QoS requirements of the m bearers to the access network device by using the transceiver module, wherein the QoS requirements of the m bearers are used for allocating user plane resources of the m bearers.

27. The session management network element according to claim 26, wherein the first information comprises the QoS policy information corresponding to each service sub-flow; and
the processing module is further configured to send the QoS policy information corresponding to each service sub-flow to the user plane network element by using the transceiver module, wherein the QoS policy information corresponding to each service sub-flow is used for allocating a user plane resource corresponding to each service sub-flow on the m bearers.

28. The session management network element according to any one of claims 24 to 27, wherein the session management network element further comprises a transceiver module;
the processing module is further configured to allocate a same path identifier to the plurality of service sub-flows, wherein the path identifier identifies an Internet Protocol IP transport layer transmission path between the user plane network element and the access network device; and
the transceiver module is configured to send the path identifier to the user plane network element, and send the path identifier to the access network device.

29. The session management network element according to any one of claims 23 to 28, wherein the session management network element further comprises the transceiver module; and that the processing module is configured to obtain first information comprises: receiving the first information from a policy control network element by using the transceiver module.

30. The session management network element according to claim 29, wherein the transceiver module is further configured to: before receiving the first information from the policy control network element, receive, from the user plane network element, the group identifier of the service flow group to which each of the plurality of service sub-flows belongs and flow description information of each service sub-flow; and
the transceiver module is further configured to send a request message to the policy control network element, wherein the request message comprises the group identifier of the service flow group to which each of the plurality of service sub-flows belongs and the flow description information of each service sub-flow, and is for requesting to obtain the quality of service QoS policy information corresponding to each service sub-flow or the QoS policy information of the service flow group to which each service sub-flow belongs.

31. A communication system, wherein the communication system comprises a session management network element and a policy control network element;
the policy control network element is configured to send first information to the session management network element, wherein the first information comprises a group identifier of a service flow group to which each of a plurality of service sub-flows belongs, and QoS policy information corresponding to each service sub-flow or QoS policy information of the service flow group to which each service sub-flow belongs;
the session management network element is configured to: receive the first information from the policy control network element, and determine, based on the group identifier of the service flow group to which each service sub-flow belongs, that there is an association relationship between the plurality of service sub-flows; and
the session management network element is further configured to guarantee associated transmission of the plurality of service sub-flows based on the QoS policy information corresponding to each service sub-flow or the QoS policy information of the service flow group to which each service sub-flow belongs.

32. The communication system according to claim 31, wherein the communication system further comprises an access network device and a user plane network element, and that the session management network element is configured to guarantee associated transmission of the plurality of service sub-flows based on the QoS policy information corresponding to each service sub-flow or the QoS policy information of the service flow group to which each service sub-flow belongs comprises:
the session management network element is configured to: after determining that current user plane forwarding resources are sufficient, determine, based on the QoS policy information corresponding to each service sub-flow or the QoS policy information of the service flow group to which each service sub-flow belongs, to combine service packets in the plurality of service sub-flows into a first bearer for transmission; and
the session management network element is further configured to send a QoS requirement of the first bearer to the user plane network element, and the session management network element is further configured to send the QoS requirement of the first bearer to the access network device, wherein the QoS requirement of the first bearer is used for allocating a user plane resource of the first bearer.

33. The communication system according to claim 31, wherein the communication system further comprises an access network device and a user plane network element, and that the session management network element is configured to guarantee associated transmission of the plurality of service sub-flows based on the QoS policy information corresponding to each service sub-flow or the QoS policy information of the service flow group to which each service sub-flow belongs comprises:
the session management network element is configured to select a same user plane network element and a same access network device for the plurality of service sub-flows;
the session management network element is further configured to determine, based on the QoS policy information corresponding to each service sub-flow or the QoS policy information of the service flow group to which each service sub-flow belongs, to combine service packets in the plurality of service sub-flows into m bearers for transmission, wherein m is a positive integer greater than 1; and
the session management network element is further configured to send QoS requirements of the m bearers to the user plane network element, and the session management network element is further configured to send the QoS requirements of the m bearers to the access network device, wherein the QoS requirements of the m bearers are used for allocating user plane resources of the m bearers.

34. The communication system according to claim 32 or 33, wherein the user plane network element is further configured to: after detecting that the plurality of service sub-flows are new service sub-flows, determine, based on the group identifier of the service flow group to which each of the plurality of service sub-flows belongs, that there is an association relationship between the plurality of service sub-flows;
the user plane network element is further configured to send the group identifier of the service flow group to which each of the plurality of service sub-flows belongs and flow description information of each service sub-flow to the session management network element; and
the session management network element is further configured to: receive, from the user plane network element, the group identifier of the service flow group to which each of the plurality of service sub-flows belongs and the flow description information of each service sub-flow, and send a request message to the policy control network element, wherein the request message comprises the group identifier of the service flow group to which each of the plurality of service sub-flows belongs and the flow description information of each service sub-flow, and is for requesting to obtain the QoS policy information corresponding to each service sub-flow or the QoS policy information of the service flow group to which each service sub-flow belongs.

35. The communication system according to any one of claims 31 to 34, wherein the communication system further comprises an application function network element;
the application function network element is configured to send second information to the policy control network element after it is determined that there is an association relationship between the plurality of service sub-flows, wherein the second information comprises the group identifier of the service flow group to which each of the plurality of service sub-flows belongs, and QoS policy information to be used for each service sub-flow or QoS policy information to be used for the service flow group to which each service sub-flow belongs; and
the policy control network element is further configured to: receive the second information from the application function network element, and determine the QoS policy information corresponding to each service sub-flow or the QoS policy information of the service flow group to which each service sub-flow belongs in the first information based on the QoS policy information to be used for each service sub-flow or the QoS policy information of the service flow group to which each service sub-flow belongs and based on local policy rule configuration.

36. A computer-readable storage medium, wherein the computer-readable storage medium stores instructions, and when the instructions are run on a computer, the computer is enabled to perform the method according to any one of claims 1 to 7, or perform the method according to any one of claims 8 to 15.
